(19) Europäisches Patentamt
European Patent Office
Office européen des brevets

(11) EP 3 498 770 A1

(12) EUROPEAN PATENT APPLICATION
published in accordance with Art. 153(4) EPC

(43) Date of publication:
**19.06.2019 Bulletin 2019/25**

(21) Application number: **17839392.2**

(22) Date of filing: **07.08.2017**

(51) Int Cl.:
***C08L 1/02*** *(2006.01)* ***C08K 5/16*** *(2006.01)*
***C08K 5/36*** *(2006.01)* ***D21H 11/20*** *(2006.01)*
***D21H 15/02*** *(2006.01)* ***C08B 5/00*** *(2006.01)*

(86) International application number:
**PCT/JP2017/028525**

(87) International publication number:
**WO 2018/030321 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.08.2016 JP 2016157573**
**23.09.2016 JP 2016185283**

(71) Applicant: **Oji Holdings Corporation**
**Chuo-ku**
**Tokyo 104-0061 (JP)**

(72) Inventors:
- **TANAKA Rina**
  **Tokyo 104-0061 (JP)**
- **SAKAI Koh**
  **Tokyo 104-0061 (JP)**
- **SUNAGAWA Hirokazu**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) FIBROUS-CELLULOSE-CONTAINING COMPOSITION AND SHEET

(57) It is an object of the present invention to provide a composition comprising cellulose fibers having a fiber width of 1000 nm or less, the properties of which are maintained even after long-term storage. The present invention relates to a cellulose fiber-containing composition comprising cellulose fibers having a fiber width of 1000 nm or less and an antiseptic containing at least one type selected from a nitrogen atom, a sulfur atom and a halogen atom, wherein the content of the antiseptic is 10 parts by mass or less with respect to 100 parts by mass of the cellulose fibers

EP 3 498 770 A1

## Description

### Technical Field

The present invention relates to a cellulose fiber-containing composition and sheet. More specifically, the present invention relates to a composition and a sheet, both comprising ultrafine cellulose fibers.

### Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 μm or more and 50 μm or less, in particular, wood-derived cellulose fibers (pulp) have been widely used mainly as paper products so far.

Ultrafine cellulose fibers, which have a fiber diameter of 1 μm or less, have also been known as cellulose fibers. In recent years, a sheet composed of such ultrafine cellulose fibers, and a complex comprising an ultrafine cellulose fiber-containing sheet and a resin, have been developed. Since ultrafine cellulose fibers can exhibit thickening action, the use of such ultrafine cellulose fibers as a thickener for various intended uses has also been studied.

For example, Patent Document 1 discloses a thickener comprising ultrafine cellulose fibers having a fiber width of 1000 nm or less, in which some hydroxy groups of cellulose constituting the fibers are substituted with phosphorus oxoacid groups. Patent Document 1 describes that a composition comprising the thickener may comprise an antiseptic as a functional additive, and exemplifies paraben such an antiseptic. Patent Document 2 discloses an aqueous ink composition comprising cellulose fibers having a number average fiber width of 2 to 150 nm, at least one of a coloring agent and a masking agent, and water. In addition, Patent Document 3 discloses an aqueous agrochemical composition comprising cellulose fibers having a number average fiber width of 2 to 150 nm, an agrochemical active ingredient, and water. In these documents, an antiseptic is used as an additive, and 1,2-benzisothiazolin-3-one is used.

### Prior Art Documents

#### Patent Documents

Patent Document 1: JP-A-2015-189698

Patent Document 2: JP-A-2013-181167

Patent Document 3: JP-A-2011-57571

### Summary of Invention

#### Object to be Solved by the Invention

By the way, in some cases, a composition comprising cellulose fibers having a fiber width of 1000 nm or less is stored as a liquid composition for a long period of time, depending on the mode of use. The composition is required to maintain the viscosity of a liquid composition even after long-term storage.

Hence, in order to achieve the object of the conventional art, the present inventors have conducted studies for the purpose of providing a cellulose fiber-containing composition that maintains the viscosity thereof before storage, even after long-term storage.

#### Means for Solving the Object

As a result of intensive studies directed towards achieving the aforementioned object, the present inventors have found that an antiseptic having a predetermined structure is added in a predetermined amount to a composition comprising cellulose fibers having a fiber width of 1000 nm or less, so that the viscosity of the cellulose fiber-containing composition can be maintained even after long-term storage.

Specifically, the present invention has the following configurations.

[1] A cellulose fiber-containing composition comprising cellulose fibers having a fiber width of 1000 nm or less, and

an antiseptic containing at least one type selected from a nitrogen atom, a sulfur atom and a halogen atom, wherein the content of the antiseptic is 10 parts by mass or less with respect to 100 parts by mass of the cellulose fibers.
[2] The cellulose fiber-containing composition according to [1], wherein the cellulose fibers have a phosphoric acid group or a phosphoric acid group-derived substituent.
[3] The cellulose fiber-containing composition according to [1] or [2], wherein the antiseptic is at least one type selected from an organic nitrogen sulfur compound, an organic nitrogen halogen compound, an organic nitrogen compound, and an organic sulfur compound.
[4] The cellulose fiber-containing composition according to any one of [1] to [3], which further comprises a hydrophilic polymer, wherein
the content of the hydrophilic polymer is 0.5 parts by mass or more and 50 parts by mass or less, with respect to 100 parts by mass of the cellulose fibers.
[5] The cellulose fiber-containing composition according to any one of [1] to [4], wherein the cellulose fiber-containing composition is a slurry, and when the solid concentration of the slurry is set at 1.8% by mass, the viscosity measured under conditions of 25°C and a rotation number of 3 rpm is 70000 mPa·s or more.
[6] The cellulose fiber-containing composition according to any one of [1] to [5], wherein the cellulose fiber-containing composition is a slurry having a viscosity retention percentage of 80% or more, wherein the viscosity retention percentage is defined according to the following equation:

$$\text{Viscosity retention percentage (\%)} = \text{slurry viscosity left at rest at 50°C for 480 hours} / \text{initial slurry viscosity} \times 100,$$

provided that the slurry viscosity after being left at rest at 50°C for 480 hours is a viscosity obtained by setting the solid concentration of the slurry at 1.8% by mass and measuring under conditions of 25°C and a rotation number of 3 rpm, after the slurry has been left at rest at 50°C for 480 hours, whereas the initial slurry viscosity is a viscosity obtained by setting the solid concentration of the slurry at 1.8% by mass and measuring under conditions of 25°C and a rotation number of 3 rpm.
[7] The cellulose fiber-containing composition according to any one of [1] to [6], wherein the cellulose fiber-containing composition is a slurry, and the haze measured by setting the solid concentration of the slurry at 0.2% by mass and using a glass cell having an optical path length of 1 cm in accordance with JIS K 7136 is 2.0% or less.
[8] The cellulose fiber-containing composition according to any one of [1] to [7], wherein the cellulose fiber-containing composition is a slurry having a haze increasing percentage of 50% or less, wherein the haze increasing percentage is defined according to the following equation:

$$\text{Haze increasing percentage (\%)} = (\text{haze of slurry after being left at rest at 50°C for 480 hours} - \text{initial haze of slurry}) / \text{initial haze of slurry} \times 100,$$

provided that the haze of a slurry after being left at rest at 50°C for 480 hours is a haze measured by setting the solid concentration of the slurry at 0.2% by mass and using a glass cell having an optical path length of 1 cm in accordance with JIS K 7136, after the slurry has been left at rest at 50°C for 480 hours, whereas the initial haze of a slurry is a haze measured by setting the solid concentration of the slurry at 0.2% by mass and using a glass cell having an optical path length of 1 cm in accordance with JIS K 7136.
[9] The cellulose fiber-containing composition according to any one of [1] to [8], wherein the cellulose fiber-containing composition is a slurry for use in the formation of a sheet.
[10] The cellulose fiber-containing composition according to any one of [1] to [9], wherein the cellulose fiber-containing composition is a slurry for use in the formation of a sheet, wherein the sheet, that formed after the slurry has been left at rest at 50°C for 192 hours, has a haze measured in accordance with JIS K 7136 of 1% or less.
[11] A sheet comprising cellulose fibers having a fiber width of 1000 nm or less and an antiseptic containing at least one type selected from a nitrogen atom, a sulfur atom and a halogen atom, wherein
the content of the antiseptic is 10% by mass or less with respect to the total mass of the sheet.
[12] The sheet according to [11], wherein the tensile elastic modulus measured under conditions of 23°C and a relative humidity of 50% in accordance with JIS P 8113 is 3 GPa or more.

Advantageous Effects of Invention

According to the present invention, a cellulose fiber-containing composition that maintains the viscosity thereof before storage, even after long-term storage, can be obtained. The cellulose fiber-containing composition of the present

invention is a composition that can be stored for a long period of time.

Brief Description of Drawings

Figure 1 is a graph showing the relationship between the amount of NaOH added dropwise to a fiber raw material and the electrical conductivity.
Figure 2 is a graph showing the relationship between the amount of NaOH added dropwise to a fiber raw material having a carboxyl group and the electrical conductivity.

Embodiments of Carrying out the Invention

Hereinafter, the present invention will be described in detail. The below-mentioned constituent features will be explained based on representative embodiments or specific examples in some cases. However, the present invention is not limited to such embodiments.

(Cellulose fiber-containing composition)

The present invention relates to a cellulose fiber-containing composition comprising cellulose fibers having a fiber width of 1000 nm or less (hereinafter also referred to as "ultrafine cellulose fibers") and an antiseptic containing at least one type selected from a nitrogen atom, a sulfur atom and a halogen atom. Herein, the content of the antiseptic is 10 parts by mass or less with respect to 100 parts by mass of the cellulose fibers. Since the composition of the present invention is a composition comprising ultrafine cellulose fibers, it may also be referred to as an "ultrafine cellulose fiber-containing composition."

Since the cellulose fiber-containing composition of the present invention has the above-described configuration, it is a composition that can be stored for a long period of time. Specifically, even in a case where the cellulose fiber-containing composition of the present invention is stored over a long period of time, the properties of a composition comprising ultrafine cellulose fibers are maintained. Specifically, even after long-term storage, the cellulose fiber-containing composition of the present invention can exhibit viscosity equivalent to that before the storage. In addition, the cellulose fiber-containing composition of the present invention can also maintain transparency equivalent to that before the storage.

Since the cellulose fiber-containing composition of the present invention comprises a predetermined amount of an antiseptic containing at least one type selected from a nitrogen atom, a sulfur atom and a halogen atom, its initial viscosity before storage is also high. Hence, the composition itself can be used as a thickener. Moreover, the cellulose fiber-containing composition comprising an antiseptic containing at least one type selected from a nitrogen atom, a sulfur atom and a halogen atom is also advantageous in terms of high safety and good handling ability.

The content of the antiseptic is 10 parts by mass or less with respect to 100 parts by mass of the cellulose fibers, and it is preferably 5 parts by mass or less, more preferably 3 parts by mass or less, even more preferably 1 part by mass or less, further preferably 0.5 parts by mass or less, particularly preferably 0.2 parts by mass or less, and most preferably 0.1 part by mass or less. On the other hand, even in a case where the antiseptic is added to the cellulose fiber-containing composition in a trace amount, such as 0.05 parts by mass or less, or 0.01 part by mass or less, with respect to 100 parts by mass of the cellulose fibers, it can exhibit its effects. In the present invention, even in a case where the content of the antiseptic is suppressed within the above-described range, stability can be enhanced upon long-term storage, and the occurrence of inconveniences, such as a decrease in viscosity or a decrease in transparency due to changes with the passage of time, can be prevented. In addition, in the present invention, by setting the content of the antiseptic within the above-described range, the initial viscosity before the storage of the composition can be enhanced. Besides, it may be adequate, if the antiseptic is added, even in a trace amount, into the cellulose fiber-containing composition. The minimum value of the content of the antiseptic may be set, for example, at 0.0001 part by mass. The content of the antiseptic in the cellulose fiber-containing composition can be quantified by spectroscopic measurements such as NMR or IR, MS fragment analysis, or UV analysis.

The form of the cellulose fiber-containing composition is not particularly limited, and can be present in various forms such as powders, jelly, slurry, or a solid. Among others, the cellulose fiber-containing composition is preferably a slurry, and more preferably a high-viscosity slurry. Specifically, the cellulose fiber-containing composition is a slurry having a solid concentration of 1.8% by mass, and also, preferably having a viscosity of 70000 mPa·s or more, wherein the viscosity is measured under conditions of 25 °C and a rotation number of 3 rpm, more preferably having a viscosity of 73000 mPa·s or more, further preferably having a viscosity of 75000 mPa·s or more, and particularly preferably having a viscosity of 80000 mPa·s or more. The above-described viscosity is a viscosity before the storage of the cellulose

fiber-containing composition, and in the present description, such a viscosity is also referred to as an "initial viscosity" at times. It is to be noted that the initial viscosity is a viscosity obtained by producing a slurry, leaving it at room temperature, and then measuring the viscosity thereof within 20 hours.

For the measurement of the initial viscosity, a type B viscometer (No. 4 roter) (manufactured by BROOKFIELD; analog viscometer T-LVT) can be used. The measurement conditions are determined to be 25°C, a rotation number of 3 rpm, and a measurement time of 3 minutes.

When the cellulose fiber-containing composition of the present invention is a slurry, the viscosity retention percentage defined according to the following equation is preferably 80% or more, more preferably 90% or more, and further preferably 95% or more. In addition, the viscosity retention percentage may be 100%, or may also exceed 100%.

Viscosity retention percentage (%) = slurry viscosity left at rest at 50°C for 480 hours / initial slurry viscosity x 100.

Herein, the slurry viscosity after being left at rest at 50°C for 480 hours is a viscosity obtained by setting the solid concentration of the slurry at 1.8% by mass, leaving the slurry at rest at 50°C for 480 hours, and then measuring the viscosity using a type B viscometer (No. 4 roter) (manufactured by BROOKFIELD; analog viscometer T-LVT) under conditions of 25°C, a rotation number of 3 rpm, and a measurement time of 3 minutes. On the other hand, the initial slurry viscosity is a viscosity obtained by setting the solid concentration of a slurry at 1.8% by mass, producing the slurry, then leaving the produced slurry at room temperature, and then measuring the viscosity within 20 hours using a type B viscometer (No. 4 roter) (manufactured by BROOKFIELD; analog viscometer T-LVT) under conditions of 25°C, a rotation number of 3 rpm, and a measurement time of 3 minutes.

When the cellulose fiber-containing composition of the present invention is a slurry, the haze of the slurry, which is measured by setting the solid concentration of the slurry at 0.2% by mass and using a glass cell having an optical path length of 1 cm in accordance with JIS K 7136, is preferably 2.0% or less, more preferably 1.5% or less, and further preferably 1.0% or less. Since the slurry of the cellulose fiber-containing composition of the present invention, which is in the above-described range, is preferable because it can be used to form a sheet having high transparency. The above-described haze value is a haze value before the storage of the cellulose fiber-containing composition, and in the present description, it is referred to as an "initial haze" in some cases. The initial haze is a haze measured within 20 hours after a slurry has been produced and has been then left at room temperature.

Herein, the haze of a slurry is measured by setting the solid concentration of the slurry at 0.2% by mass and using a glass cell having an optical path length of 1 cm in accordance with JIS K 7136. Specifically, the haze can be measured using a hazemeter (manufactured by MURAKAMI COLOR RESEARCH LABORATORY Co., Ltd.; HM-150). As a glass cell having an optical path length of 1 cm, for example, a glass cell for liquid having an optical path length of 1 cm (manufactured by Fujiwara Scientific Co., Ltd.; MG-40; inverse optical path) can be used. The zero point is measured with ion exchange water which is placed in the glass cell.

When the cellulose fiber-containing composition of the present invention is a slurry, the haze increasing percentage defined according to the below-mentioned equation is preferably 50% or less, more preferably 30% or less, and further preferably 20% or less. The haze increasing percentage may be 0%, or may also be a numerical value lower than 0%.

Haze increasing percentage (%) = (haze of slurry after being left at rest at 50°C for 480 hours - initial haze of slurry) / initial haze of slurry x 100

Herein, the haze of a slurry after being left at rest at 50°C for 480 hours is a haze value obtained by setting the solid concentration of the slurry at 0.2% by mass, and then measuring it using a glass cell having an optical path length of 1 cm in accordance with JIS K 7136, after the slurry has been left at rest at 50°C for 480 hours. On the other hand, the initial haze of a slurry is a haze value obtained by setting the solid concentration of the slurry at 0.2% by mass, and then measuring it using a glass cell having an optical path length of 1 cm in accordance with JIS K 7136. As an apparatus for measuring the haze, a hazemeter (manufactured by MURAKAMI COLOR RESEARCH LABORATORY Co., Ltd.; HM-150) can be used.

Moreover, when the cellulose fiber-containing composition is a slurry, the total transmittance obtained by setting the solid concentration of the slurry at 0.2% by mass, and then measuring it using a glass cell having an optical path length of 1 cm in accordance with JIS K 7136, is preferably 90% or more, more preferably 93% or more, and further preferably 95% or more. The above-described total light transmittance is a total light transmittance before the storage of the cellulose fiber-containing composition, and in the present description, the total light transmittance before the storage of the cellulose fiber-containing composition is referred to as an "initial total light transmittance" in some cases.

The initial total light transmittance is a total light transmittance measured within 20 hours after the slurry has been produced and has been then left at room temperature.

Herein, the total light transmittance of a slurry is measured by setting the solid concentration of the slurry at 0.2% by mass and using a glass cell having an optical path length of 1 cm in accordance with JIS K 7136. Specifically, the measurement can be carried out using a hazemeter (manufactured by MURAKAMI COLOR RESEARCH LABORATORY Co., Ltd.; HM-150). As a glass cell having an optical path length of 1 cm, for example, a glass cell for liquid having an optical path length of 1 cm (manufactured by Fujiwara Scientific Co., Ltd.; MG-40; inverse optical path) can be used. The zero point is measured with ion exchange water which is placed in the glass cell.

When the cellulose fiber-containing composition of the present invention is a slurry, the retention percentage of the total light transmittance of the slurry, which is defined according to the below-mentioned equation, is preferably 80% or more, more preferably 90% or more, and further preferably 95% or more. The retention percentage of the total light transmittance may be 100%, or may also exceed 100%.

Retention percentage (%) of total light transmittance = total light transmittance of slurry after being left at rest at 50°C for 480 hours / initial total light transmittance of slurry x 100

Herein, the total light transmittance of the slurry after being left at rest at 50°C for 480 hours is a total light transmittance obtained by setting the solid concentration of the slurry at 0.2% by mass, and then measuring it using a glass cell having an optical path length of 1 cm in accordance with JIS K 7136, after the slurry has been left at rest at 50°C for 480 hours. On the other hand, the initial total light transmittance of the slurry is a total light transmittance obtained by setting the solid concentration of the slurry at 0.2% by mass, and then measuring it using a glass cell having an optical path length of 1 cm in accordance with JIS K 7136. As an apparatus for measuring the total light transmittance, a hazemeter (manufactured by MURAKAMI COLOR RESEARCH LABORATORY Co., Ltd.; HM-150) can be used.

The intended use of the cellulose fiber-containing composition of the present invention is not limited, but it can be used as a thickener for various intended uses. Moreover, the present cellulose fiber-containing composition can also be used as a reinforcing material by being mixed with a resin or an emulsion. Moreover, a slurry of the cellulose fiber-containing composition may be molded to produce a molded body. In this case, it is preferable to mix a resin or an emulsion into the slurry of the cellulose fiber-containing composition. The molded body may have various shapes other than the shape of a sheet.

In the present invention, the slurry of the cellulose fiber-containing composition may be used to form a film, so that various types of sheets may be produced. Among others, the cellulose fiber-containing composition of the present invention is preferably a slurry for use in sheet formation. Since the cellulose fiber-containing composition of the present invention is a slurry having high transparency, it is preferably used in formation of a sheet.

When the cellulose fiber-containing composition of the present invention is a slurry for use in sheet formation, it is preferably a slurry for use in sheet formation, which can be used to form a highly-transparent sheet, even after the slurry has been stored for a long period of time. Specifically, even in a case where the slurry for use in sheet formation is left at rest at 50°C for 192 hours, it can be used to form a sheet having a haze measured in accordance with JIS K 7136, which is preferably 10% or less, more preferably 5% or less, and further preferably 1% or less.

A cellulose fiber-containing composition having a solid form, such as jelly or powders, can be obtained, for example, by concentrating the slurry of the cellulose fiber-containing composition. In addition, the cellulose fiber-containing composition, which is in the form of powders, is obtained, for example, by pulverizing the condensate obtained by concentration as described above. Thus, by processing the cellulose fiber-containing composition into a solid form such as jelly or powders, the water content in the powders can be reduced. Hence, the cellulose fiber-containing composition having a solid form is advantageous in that it is easily mixed with a hydrophobic resin. Moreover, by dispersing the cellulose fiber-containing composition having a solid form such as jelly or powders in a solvent such as water, so as to prepare a slurry again, and transport costs can be advantageously reduced.

The method of concentrating a slurry is not particularly limited, and a condensate of the slurry can be obtained by any one of filtration, compression and drying, or by a combination thereof.

Filtration can be carried out by a common method such as natural filtration, vacuum filtration, pressure filtration or a centrifugal filtration, but the method is not particularly limited. The used filtration material is not particularly limited, and a stainless steel material, a filter paper, a polypropylene material, a nylon material, a polyethylene material, a polyester material, or the like can be used.

Compression can be carried out using a common press apparatus such as a belt press, a screw press, or a filter press, but the method is not particularly limited. The used filtration material is not particularly limited, and a stainless steel material, a filter paper, a polypropylene material, a nylon material, a polyethylene material, a polyester material,

or the like can be used.

Drying can be carried out by a common method such as hot air drying, cold air drying, freeze-drying, spray drying, microwave drying, or high frequency drying, but the method is not particularly limited.

Pulverization can be carried out using a common pulverization apparatus, such as a ball mill, a bead mill, a colloid mill, a conical mill, a disk mill, an edge mill, a milling mill, a hammer mill, a mortar, a pellet mill, a VSI mill, Wiley mill, a windmill (milling machine), a roller mill, or a jet mill, but the method is not particularly limited.

As described above, the cellulose fiber-containing composition, which is in the form of a solid, is re-suspended in a solvent, so as to obtain a re-dispersion of ultrafine cellulose fibers. The solvent used in the re-suspension of ultrafine cellulose fibers is not particularly limited. Examples of such a solvent include water, a single use of organic solvent, and a mixture of water and an organic solvent. Examples of the organic solvent include alcohols, polyhydric alcohols, ketones, ethers, dimethyl sulfoxide (DMSO), dimethylformamide (DMF) and dimethylacetoamide (DMAc). The alcohols include methanol, ethanol, n-propanol, isopropanol, n-butanol and t-butyl alcohol. The polyhydric alcohols include ethylene glycol and glycerin. The ketones include acetone and methyl ethyl ketone. The ethers include diethyl ether, tetrahydrofuran, ethylene glycol monomethyl ether, ethylene glycol monoethyl ether, ethylene glycol mono-n-butyl ether and ethylene glycol mono-t-butyl ether. The organic solvents may be used in a single type, or concurrently in two or more types. Among these, the solvent is preferably a mixture of alcohols and water, a mixture of ethers of water, or a mixture of DMSO and water.

(Cellulose fibers)

The cellulose fiber-containing composition of the present invention comprises cellulose fibers having a fiber width of 1000 nm or less (ultrafine cellulose fibers). The ultrafine cellulose fibers are preferably fibers having an ionic functional group, and in this case, the ionic functional group is preferably an anionic functional group (hereinafter also referred to as an "anionic group"). The anionic group is preferably at least one selected from, for example, a phosphoric acid group or a phosphoric acid group-derived substituent (which is simply referred to as a "phosphoric acid group" at times), a carboxyl group or a carboxyl group-derived substituent (which is simply referred to as a "carboxyl group" at times), and a sulfone group or a sulfone group-derived substituent (which is simply referred to as a "sulfone group" at times); is more preferably at least one selected from a phosphoric acid group and a carboxyl group; and is particularly preferably a phosphoric acid group. In the present description, cellulose fibers having a phosphoric acid group are also referred to as "phosphorylated ultrafine cellulose fibers," at times.

The content of the ultrafine cellulose fibers is preferably 40% by mass or more, more preferably 50% by mass or more, and further preferably 55% by mass or more, with respect to the total solid content of the cellulose fiber-containing composition. On the other hand, the content of the ultrafine cellulose fibers is preferably 95% by mass or less.

Although there is no particular restriction on a cellulose fiber raw material for obtaining ultrafine cellulose fibers, pulp is preferably used from the viewpoint of availability and inexpensiveness. Examples of the pulp include wood pulp, non-wood pulp, and deinked pulp. Examples of the wood pulp include chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP). Further, included are, but not particularly limited to, semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp include, but not particularly limited to, cotton pulps such as cotton linter and cotton lint; non-wood type pulps such as hemp, wheat straw, and bagasse; and cellulose isolated from ascidian, seaweed, etc., chitin, and chitosan. As a deinked pulp, there is deinked pulp using waste paper as a raw material, but it is not particularly limited thereto. The pulp of the present embodiment may be used singly, or in combination of two or more types. Among the above-listed pulp types, wood pulp and deinked pulp including cellulose are preferable from the viewpoint of easy availability. Among wood pulps, chemical pulp is preferable because it has a higher cellulose content to enhance the yield of ultrafine cellulose fibers and decomposition of cellulose in the pulp is mild at the time of ultrafine fiber formation (defibration) to yield ultrafine cellulose fibers having a long fiber length with a high aspect ratio. Among them, kraft pulp and sulfite pulp are most preferably selected. A sheet containing the ultrafine cellulose fibers having a long fiber length with a high aspect ratio tends to exhibit a high strength.

The average fiber width of ultrafine cellulose fibers is 1000 nm or less as observed with an electron microscope. The average fiber width is preferably 2 nm or more and 1000 nm or less, more preferably 2 nm or more and 100 nm or less, even more preferably 2 nm or more and 50 nm or less, and further preferably 2 nm or more and 10 nm or less, but is not particularly limited thereto. When the average fiber width of ultrafine cellulose fibers is less than 2 nm, since they are dissolved in water as cellulose molecules, there appears tendency that the physical properties (strength, rigidity, and dimensional stability) as an ultrafine cellulose fiber are not expressed sufficiently. The ultrafine cellulose fiber is, for example, monofilament cellulose having a fiber width of 1000 nm or less.

The measurement of a fiber width of an ultrafine cellulose fiber by electron microscopic observation is carried out as follows. An aqueous suspension of ultrafine cellulose fibers having a concentration of 0.05% by mass or more

and 0.1% by mass or less is prepared, and the suspension is casted onto a hydrophilized carbon film-coated grid as a sample for TEM observation. If the sample contains wide fibers, SEM images of the surface of the suspension casted onto glass may be observed. The sample is observed using electron microscope images taken at a magnification of 1000x, 5000x, 10000x, or 50000x according to the widths of the constituent fibers. However, the sample, the observation conditions, and the magnification are adjusted so as to satisfy the following conditions:

(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. 3 or more sets of images of surface portions, which are at least not overlapped, are thus observed, and the widths of the fibers intersecting the straight line X and the straight line Y are read in the each image. At least 120 fiber widths (20 fibers $\times$ 2 $\times$ 3 = 120) are thus read. The average fiber width (which is simply referred to as a "fiber width" at times) of ultrafine cellulose fibers is an average value of the fiber widths thus read.
The fiber length of the ultrafine cellulose fibers is not particularly limited, and it is preferably 0.1 $\mu$m or more and 1000 $\mu$m or less, more preferably 0.1 $\mu$m or more and 800 $\mu$m or less, and particularly preferably 0.1 $\mu$m or more and 600 $\mu$m or less. By setting the fiber length within the above-described range, destruction of the crystalline region of the ultrafine cellulose fibers can be suppressed, and the slurry viscosity of the ultrafine cellulose fibers can also be set within an appropriate range. It is to be noted that the fiber length of the ultrafine cellulose fibers can be obtained by an image analysis using TEM, SEM or AFM.
The ultrafine cellulose fibers preferably have a type I crystal structure. In this regard, the fact that ultrafine cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified based on the fact that there are typical peaks at two positions near 2$\theta$ = 14° or more and 17° or less, and near 2$\theta$ = 22° or more and 23° or less.
The percentage of the type I crystal structure occupied in the ultrafine cellulose fibers is preferably 30% or more, more preferably 50% or more, and further preferably 70% or more. In this case, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).
The ultrafine cellulose fibers preferably have phosphoric acid groups or substituents derived from the phosphoric acid group. The phosphoric acid group is a divalent functional group corresponding to a phosphoric acid from which a hydroxyl group is removed. Specifically, it is a group represented by $-PO_3H_2$. The substituents derived from the phosphoric acid group include substituents, such as condensation-polymerized phosphoric acid groups, salts of phosphoric acid groups, and phosphoric acid ester groups, and they may be either ionic substituents or nonionic substituents.
In the present invention, the phosphoric acid group or the substituent derived from the phosphoric acid group may be a substituent represented by the following Formula (1):

[Formula 1]

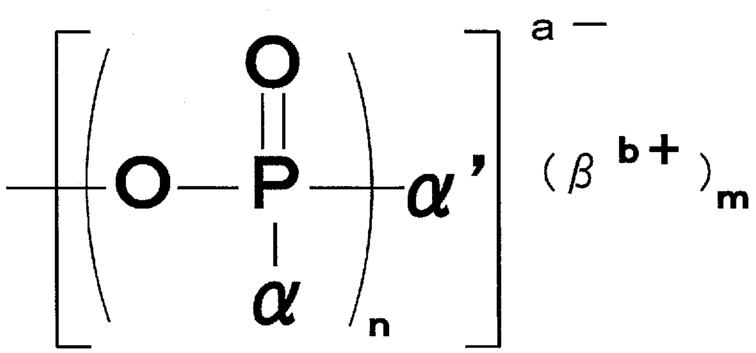

(1)

In the Formula (1), a, b, m and n each independently represent an integral number (provided that a = b x m); $\alpha$ and $\alpha$' each independently represent R or OR. R is a hydrogen atom, a saturated straight chain hydrocarbon group, a saturated branched chain hydrocarbon group, a saturated cyclic hydrocarbon group, an unsaturated straight chain

hydrocarbon group, an unsaturated branched chain hydrocarbon group, an aromatic group, or a derivative group thereof; and β is a monovalent or higher valent cation consisting of organic matter or inorganic matter.

< Phosphoric acid group introduction step >

The phosphoric acid group introduction step may be performed by allowing at least one selected from a compound having phosphoric acid groups and salts thereof (hereinafter, referred to as a "phosphorylating reagent" or "Compound A") to react with the fiber raw material including cellulose. Such a phosphorylating reagent may be mixed into the fiber raw material in a dry or wet state, in the form of a powder or an aqueous solution. In another example, a powder or an aqueous solution of the phosphorylating reagent may be added into a slurry of the fiber raw material.

The phosphoric acid group introduction step may be performed by allowing at least one selected from a compound having phosphoric acid groups and salts thereof (a phosphorylating reagent or Compound A) to react with the fiber raw material including cellulose. It is to be noted that this reaction may be performed in the presence of at least one selected from urea and derivatives thereof (hereinafter, referred to as "Compound B").

One example of the method of allowing Compound A to act on the fiber raw material in the presence of Compound B includes a method of mixing the fiber raw material in a dry or wet state with a powder or an aqueous solution of Compound A and Compound B. Another example thereof includes a method of adding a powder or an aqueous solution of Compound A and Compound B to a slurry of the fiber raw material. Among them, a method of adding an aqueous solution of Compound A and Compound B to the fiber raw material in a dry state, or a method of adding a powder or an aqueous solution of Compound A and Compound B to the fiber raw material in a wet state is preferable because of the high homogeneity of the reaction. Compound A and Compound B may be added at the same time or may be added separately. Alternatively, Compound A and Compound B to be subjected to the reaction may be first added as an aqueous solution, which may be then compressed to squeeze out redundant chemicals. The form of the fiber raw material is preferably a cotton-like or thin sheet form, but the form is not particularly limited thereto.

The Compound A used in the present embodiment is at least one selected from a compound having a phosphoric acid group and a salt thereof.

Examples of the compound having a phosphoric acid group include, but are not particularly limited to, phosphoric acid, lithium salts of phosphoric acid, sodium salts of phosphoric acid, potassium salts of phosphoric acid, and ammonium salts of phosphoric acid. Examples of the lithium salts of phosphoric acid include lithium dihydrogen phosphate, dilithium hydrogen phosphate, trilithium phosphate, lithium pyrophosphate, and lithium polyphosphate. Examples of the sodium salts of phosphoric acid include sodium dihydrogen phosphate, disodium hydrogen phosphate, trisodium phosphate, sodium pyrophosphate, and sodium polyphosphate. Examples of the potassium salts of phosphoric acid include potassium dihydrogen phosphate, dipotassium hydrogen phosphate, tripotassium phosphate, potassium pyrophosphate, and potassium polyphosphate. Examples of the ammonium salts of phosphoric acid include ammonium dihydrogen phosphate, diammonium hydrogen phosphate, triammonium phosphate, ammonium pyrophosphate, and ammonium polyphosphate.

Among them, from the viewpoints of high efficiency in introduction of the phosphoric acid group, an improving tendency of the defibration efficiency in a defibration step described below, low cost, and industrial applicability, phosphoric acid, sodium phosphate, potassium phosphate, and ammonium phosphate are preferable. Sodium dihydrogen phosphate, or disodium hydrogen phosphate is more preferable.

Further, since the uniformity of the reaction is improved and the efficiency in introduction of a phosphoric acid group is enhanced, the Compound A is preferably used as an aqueous solution. Although there is no particular restriction on the pH of an aqueous solution of the Compound A, the pH is preferably pH 7 or less because the efficiency in introduction of a phosphoric acid group is high, and more preferably pH 3 or more and pH 7 or less from the viewpoint of suppression of hydrolysis of a pulp fiber. The pH of an aqueous solution of the Compound A may be adjusted, for example, by using, among compounds having a phosphoric acid group, a combination of an acidic one and an alkaline one, and changing the amount ratio thereof. The pH of an aqueous solution of Compound A may also be adjusted by adding an inorganic alkali or an organic alkali to an acidic compound among compounds having a phosphoric acid group.

Although there is no particular restriction on the amount of the Compound A added to a fiber raw material, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and most preferably 2% by mass or more and 30% by mass or less. When the amount of phosphorus atoms added to the fiber raw material is within the above-described range, the yield of ultrafine cellulose fibers can be further improved. On the other hand, by setting the amount of phosphorus atoms added to the fiber raw material at 100% by mass or less, the cost of the used Compound A can be suppressed, while enhancing phosphorylation efficiency.

Examples of the Compound B used in the present embodiment include urea, biuret, 1-phenyl urea, 1-benzyl urea, 1-methyl urea, 1-ethyl urea and the like.

The Compound B is preferably used as an aqueous solution, as with the Compound A. Further, an aqueous solution in which both the Compound A and Compound B are dissolved is preferably used, because the uniformity of a reaction may be enhanced. The amount of the Compound B added to a fiber raw material (absolute dry mass) is preferably 1% by mass or more and 500% by mass or less, more preferably 10% by mass or more and 400% by mass or less, further preferably 100% by mass or more and 350% by mass or less, and particularly preferably 150% by mass or more and 300% by mass or less.

The reaction system may contain an amide or an amine, in addition to the Compound A and the Compound B. Examples of the amide include formamide, dimethylformamide, acetamide, and dimethylacetamide. Examples of the amine include methylamine, ethylamine, trimethylamine, triethylamine, monoethanolamine, diethanolamine, triethanolamine, pyridine, ethylenediamine, and hexamethylenediamine. Among them, particularly, triethylamine is known to work as a favorable reaction catalyst.

In the phosphoric acid group introduction step, it is preferable to perform a heat treatment. For the temperature of such a heat treatment, it is preferable to select a temperature that allows an efficient introduction of phosphoric acid groups while suppressing the thermal decomposition or hydrolysis reaction of fibers. Specifically, the temperature is preferably 50°C or higher and 300°C or lower, more preferably 100°C or higher and 250°C or lower, and further preferably 130°C or higher and 200°C or lower. In addition, a vacuum dryer, an infrared heating device, or a microwave heating device may be used for heating.

Upon the heat treatment, if the time for leaving the fiber raw material to stand still gets longer while the fiber raw material slurry to which the Compound A is added contains water, as drying advances, water molecules and the Compound A dissolved therein move to the surface of the fiber raw material. As such, there is a possibility of the occurrence of unevenness in the concentration of the Compound A in the fiber raw material, and the introduction of phosphoric acid groups to the fiber surface may not progress uniformly. In order to suppress the occurrence of unevenness in the concentration of the Compound A in the fiber raw material due to drying, the fiber raw material in the shape of a very thin sheet may be used, or a method of heat-drying or vacuum-drying the fiber raw material, while kneading or stirring with the Compound A using a kneader or the like, may be employed.

As a heating device used for heat treatment, a device capable of always discharging moisture retained by slurry or moisture generated by an addition reaction of phosphoric acid groups with hydroxy groups of the fiber to the outside of the device system is preferable, and for example, forced convection ovens or the like are preferable. By always discharging moisture in the device system, in addition to being able to suppress a hydrolysis reaction of phosphoric acid ester bonds, which is a reverse reaction of the phosphoric acid esterification, acid hydrolysis of sugar chains in the fiber may be suppressed as well, and ultrafine fibers with a high axial ratio can be obtained.

The time for heat treatment is, although affected by the heating temperature, preferably 1 second or more and 300 minutes or less, more preferably 1 second or more and 1000 seconds or less, and further preferably 10 seconds or more and 800 seconds or less, after moisture is substantially removed from the fiber raw material slurry. In the present invention, by setting the heating temperature and heating time within an appropriate range, the amount of phosphoric acid groups introduced can be set within a preferred range.

The amount of phosphoric acid groups introduced is, per 1 g (mass) of the ultrafine cellulose fibers, preferably 0.1 mmol/g or more and 3.65 mmol/g or less, more preferably 0.14 mmol/g or more and 3.5 mmol/g or less, even more preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less. By setting the amount of phosphoric acid groups introduced within the above-described range, it may become easy to perform fibrillation on the fiber raw material, and the stability of the ultrafine cellulose fibers can be enhanced. In addition, by setting the amount of phosphoric acid groups introduced within the above-described range, it becomes possible to keep the hydrogen bond between ultrafine cellulose fibers, while facilitating fibrillation, and thus, the sheet is anticipated to have favorable strength.

The amount of phosphoric acid groups introduced into a fiber raw material may be measured by a conductometric titration method. Specifically, the amount introduced may be measured by performing fibrillation on ultrafine fibers in a defibration treatment step, treating the resulting slurry comprising ultrafine cellulose fibers with an ion exchange resin, and then examining a change in the electrical conductivity while adding an aqueous sodium hydroxide solution.

The conductometric titration confers a curve shown in Figure 1 as an alkali is added. First, the electrical conductivity is rapidly reduced (hereinafter, this region is referred to as a "first region"). Then, the conductivity starts rising slightly (hereinafter, this region is referred to as a "second region"). Then, the increment of the conductivity is increased (hereinafter, this region is referred to as a "third region"). The boundary point between the second region and the third region is defined as a point at which a change amount in the two differential values of conductivity, namely, an increase in the conductivity (inclination) becomes maximum. In short, three regions appear. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount

of the alkali required for the first region. On the other hand, the amount of the strongly acidic group agrees with the amount of the phosphorus atom regardless of the presence or absence of condensation. Therefore, the simple term "the amount of the phosphoric acid group introduced (or the amount of the phosphoric acid group)" or "the amount of the substituent introduced (or the amount of the substituent)" refers to the amount of the strongly acidic group. That is to say, the amount (mmol) of the alkali required for the first region in the curve shown in Figure 1 is divided by the solid content (g) in the slurry as a titration target to obtain the amount (mmol/g) of the substituent introduced.

The phosphoric acid group introduction step may be performed at least once, but may be repeated multiple times as well. This case is preferable, since more phosphoric acid groups are introduced.

< Introduction of carboxyl group >

In the present invention, when the ultrafine cellulose fibers have carboxyl groups, such carboxyl groups can be introduced into the ultrafine cellulose fibers, for example, by performing an oxidation treatment such as a TEMPO oxidation treatment on the fiber raw material, or by treating the ultrafine cellulose fibers with a compound having groups derived from carboxylic acid, a derivative thereof, or an acid anhydride thereof or a derivative thereof.

Examples of the compound having a carboxyl group include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid.

Examples of the acid anhydride of the compound having a carboxyl group include, but are not particularly limited to, acid anhydrides of dicarboxylic acid compounds, such as maleic anhydride, succinic anhydride, phthalic anhydride, glutaric anhydride, adipic anhydride, or itaconic anhydride.

Examples of the derivative of the compound having a carboxyl group include, but are not particularly limited to, an imidized product of the acid anhydride of the compound having a carboxyl group and a derivative of the acid anhydride of the compound having a carboxyl group. Examples of the imidized product of the acid anhydride of the compound having a carboxyl group include, but are not particularly limited to, imidized products of dicarboxylic acid compounds, such as maleimide, succinimide or phthalimide.

The derivative of the acid anhydride of the compound having a carboxyl group is not particularly limited. Examples include acid anhydrides of the compounds having a carboxyl group, in which at least some hydrogen atoms are substituted with substituents (for example, an alkyl group, a phenyl group, etc.), such as dimethylmaleic anhydride, diethylmaleic anhydride, or diphenylmaleic anhydride.

The amount of carboxyl groups introduced is, per 1 g (mass) of the ultrafine cellulose fibers, preferably 0.1 mmol/g or more and 3.65 mmol/g or less, more preferably 0.14 mmol/g or more and 3.5 mmol/g or less, further preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less.

The amount of carboxyl groups introduced into a fiber raw material can be measured by a conductometric titration method. In conductometric titration, addition of alkali gives the curve shown in Figure 2. The amount of the alkali (mmol) required for the first region in the curve shown in Figure 2 is divided by the solid content (g) in the slurry to be titrated to determine the amount of the substituents introduced (mmol/g).

< Alkali treatment >

When ultrafine cellulose fibers are produced, an alkali treatment may be conducted between an ionic functional group introduction step and a defibration treatment step described below. The method of the alkali treatment is not particularly limited. For example, a method of immersing functional group-introduced fibers in an alkaline solution may be applied.

The alkali compound contained in the alkaline solution is not particularly limited, but it may be an inorganic alkaline compound or an organic alkali compound. The solvent of the alkaline solution may be either water or an organic solvent. The solvent is preferably a polar solvent (water, or a polar organic solvent such as alcohol), and more preferably an aqueous solvent containing at least water.

Among alkaline solutions, a sodium hydroxide aqueous solution, or a potassium hydroxide aqueous solution is particularly preferable, because of high versatility.

The temperature of the alkali solution in the alkali treatment step is not particularly limited, but it is preferably 5°C or higher and 80°C or lower, and more preferably 10°C or higher and 60°C or lower.

The immersion time in the alkali solution in the alkali treatment step is not particularly limited, but it is preferably 5 minutes or more and 30 minutes or less, and more preferably 10 minutes or more and 20 minutes or less.

The amount of the alkali solution used in the alkali treatment is not particularly limited, but it is preferably 100% by mass or more and 100000% by mass or less, and more preferably 1000% by mass and 10000% by mass or less, with respect to the absolute dry mass of the phosphoric acid group-introduced fibers.

In order to reduce the consumption of an alkaline solution in the alkali treatment step, functional group-introduced fibers may be washed with water or an organic solvent before the alkali treatment step. After the alkali treatment, the alkali-treated functional group-introduced fibers are preferably washed with water or an organic solvent before the defibration treatment step in order to improve the handling property.

< Defibration treatment >

The ionic functional group-introduced fibers are subjected to a defibration treatment in a defibration treatment step. In the defibration treatment step, fibers are defibrated usually using a defibration treatment apparatus to yield a slurry comprising ultrafine cellulose fibers, and there is no particular restriction on a treatment apparatus, or a treatment method.

A high-speed defibrator, a grinder (stone mill-type crusher), a high-pressure homogenizer, an ultrahigh-pressure homogenizer, a high-pressure collision-type crusher, a ball mill, a bead mill, or the like can be used as the defibration treatment apparatus. Alternatively, for example, a wet milling apparatus such as a disc-type refiner, a conical refiner, a twin-screw kneader, an oscillation mill, a homomixer under high-speed rotation, an ultrasonic disperser, or a beater may also be used as the defibration treatment apparatus. The defibration treatment apparatus is not limited to the above. Examples of a preferred defibration treatment method include a high-speed defibrator, a high-pressure homogenizer, and an ultrahigh-pressure homogenizer, which are less affected by milling media, and are free from apprehension of contamination.

Upon the defibration treatment, the fiber raw material is preferably diluted with water and an organic solvent each alone or in combination, to prepare a slurry, though the method is not particularly limited thereto. Water as well as a polar organic solvent can be used as a dispersion medium. Preferred examples of the polar organic solvent include, but are not particularly limited to, alcohols, ketones, ethers, dimethyl sulfoxide (DMSO), dimethylformamide (DMF), and dimethylacetamide (DMAc). Examples of the alcohols include methanol, ethanol, n-propanol, isopropanol, n-butanol, and t-butyl alcohol. Examples of the ketones include acetone and methyl ethyl ketone (MEK). Examples of the ethers include diethyl ether and tetrahydrofuran (THF). One of these dispersion media may be used, or two or more thereof may be used. The dispersion medium may also contain a solid content other than the fiber raw material, for example, hydrogen-binding urea.

With regard to the ultrafine cellulose fibers, the ultrafine cellulose fiber-containing slurry obtained by the defibration treatment may be once concentrated and/or dried, and then, may be subjected to a defibration treatment again. In this case, there is no particular restriction on the method of concentration and drying, but examples thereof include a method in which a concentrating agent is added into a slurry comprising ultrafine cellulose fibers, and a method using a dehydrator, a press, a dryer, and the like used generally. Further, publicly known methods, for example as described in WO 2014/024876, WO 2012/107642, and WO 2013/121086, may be used. Also, the ultrafine cellulose fiber-containing slurry may be formed into a sheet, so that it is concentrated and dried. The formed sheet is subjected to a defibration treatment, so that an ultrafine cellulose fiber-containing slurry can be obtained again.

Examples of a device used for defibrating (pulverizing) the ultrafine cellulose fiber-containing slurry again, after the concentration and/or drying of the ultrafine cellulose fiber-containing slurry, include, but are not particularly limited to, a high-speed defibrator, a grinder (stone mill-type grinder), a high-pressure homogenizer, an ultra-high pressure homogenizer, a high-pressure collision type crusher, a ball mill, a bead mill, a disk type refiner, a conical refiner, a twin screw kneader, a vibrating mill, and a device for wet milling, such as a high-speed rotating homomixer, an ultrasonic disperser, or a beater.

(Antiseptic)

The cellulose fiber-containing composition of the present invention comprises an antiseptic containing at least one type selected from a nitrogen atom, a sulfur atom and a halogen atom. Herein, the content of the antiseptic is 10 parts by mass or less with respect to 100 parts by mass of the cellulose fibers, and it is preferably 5 parts by mass or less, more preferably 3 parts by mass or less, even more preferably 1 part by mass or less, further preferably 0.5 parts by mass or less, particularly preferably 0.2 parts by mass or less, and most preferably 0.1 part by mass or less. On the other hand, the antiseptic may be added to the cellulose fiber-containing composition in a trace amount, such as 0.05 parts by mass or less, or 0.01 part by mass or less, with respect to 100 parts by mass of the cellulose fibers. Besides, the minimum value of the content of the antiseptic can be set at, for example, 0.0001 part by mass.

The antiseptic comprises a solvent in some cases. In this case, a compound containing at least one type selected from a nitrogen atom, a sulfur atom and a halogen atom is preferably comprised in an amount of 0.1% by mass or more and 30% by mass or less, with respect to the total mass of the antiseptic comprising a solvent.

The antiseptic containing at least one type selected from a nitrogen atom, a sulfur atom and a halogen atom comprises the compound containing at least one type selected from a nitrogen atom, a sulfur atom and a halogen atom.

Such a compound is preferably at least one type selected from an organic nitrogen sulfur compound, an organic nitrogen halogen compound, an organic nitrogen compound, and an organic sulfur compound. The organic nitrogen sulfur compound is an organic compound containing a nitrogen atom and a sulfur atom in a single molecule of the compound. The organic nitrogen halogen compound is an organic compound containing nitrogen and halogen atoms in a single molecule of the compound. Examples of such a halogen atom include a fluorine atom, a chlorine atom, a bromine atom, and an iodine atom. Among others, the halogen atom is preferably a bromine atom. The organic nitrogen compound is an organic compound containing a nitrogen atom in a single molecule of the compound. In the present description, the organic nitrogen compound is a compound that does not contain a sulfur atom and a halogen atom, and it is distinguished from the above-described organic nitrogen sulfur compound or organic nitrogen halogen compound. In addition, the organic sulfur compound contains a sulfur atom in a single molecule of the compound. It is to be noted that, in the present description, the organic sulfur compound is a compound that does not contain a nitrogen atom, and that the organic sulfur compound is distinguished from the above-described organic nitrogen sulfur compound.

The organic nitrogen sulfur compound, the organic nitrogen halogen compound, the organic nitrogen compound, and the organic sulfur compound may be either chain compounds, or cyclic compounds. When the compound comprises a cyclic structure, the cyclic structure is preferably a heteroring. For example, when the organic nitrogen sulfur compound comprises a cyclic structure, it preferably comprises, as a heteroatom, at least one type selected from a nitrogen atom and a sulfur atom. When the organic nitrogen halogen compound and the organic nitrogen compound comprise a cyclic structure, these compounds preferably comprise a heteroring containing a nitrogen atom as a heteroatom. In addition, when the organic sulfur compound comprises a cyclic structure, it preferably comprises a heteroring containing a sulfur atom as a heteroatom.

Examples of the organic nitrogen sulfur compound include: alkylene bisthiocyanates such as methylene bisthiocyanate or ethylene bisthiocyanate; 3-isothiazolone compounds and complexes of such 3-isothiazolone compounds and metal salts, such as 5-chloro-2-methyl-4-isothiazolin-3-one, 2-methyl-4-isothiazolin-3-one, 4,5-dichloro-2-n-octyl-isothiazolin-3-one, 2-n-octyl-isothiazolin-3-one, or 1,2-benzisothiazolin-3-one; dithiocarbamate compounds, such as ammonium N-methyldithiocarbamate, sodium N-methyldithiocarbamate, dimethyldithiocarbamate (sodium salt), ethylene thiuram monosulfide, disodium ethylene bisdithiocarbamate, or manganese ethylene bisdithiocarbamate; sulfonamide compounds, such as chloramine T or N,N-dimethyl-N'-(fluorodichloromethylthio)-N'-phenylsulfamide; thiazole compounds, such as 2-(4-thiocyanomethylthio)benzothiazole or sodium 2-mercaptobenzothiazole; and N-(fluorodichloromethylthio)-phthalimide, 3,5-dimethyl-1,3,5-2H-tetrahydrothiadiazine-2-thione and dithio-2,2'-bis(benzmethylamde), and 2-pyridinethiol sodium oxide.

The organic nitrogen halogen compound is preferably an organic nitrogen bromine compound. Examples of the organic nitrogen bromine compound include: organic bromonitro compounds, such as 2-bromo-2-nitropropane-1,3-diol, 1,1-dibromo-1-nitro-2-propanol, 2,2-dibromo-2-nitro-1 -ethanol, 1,1-dibromo-1-nitro-2-acetoxyethane, 1,1-dibromo-1 -nitro-2-acetoxypropane, 2-bromo-2-nitro-1,3-diacetoxy-propane, tribromonitromethane, β-bromo-β-nitrostyrene, 5-bromo-5-nitro-1,3-dioxane, or 5-bromo-2-methyl-5-nitro-1,3-dioxane; organic bromcyano compounds, such as 2,2-dibromo-3-nitrilopropionamide or 2-bromo-2-bromomethyl-glutaronitrile; organic bromacetic acid esters or amides, such as 1,2-bis-(bromoacetoxy)-ethane, 1,2-bis-(bromoacetoxy)-propane, 1,4-bis-(bromoacetoxy)-2-butene, 1,2,3 ,-trisbromoacetoxypropane, methyl enebis bromoacetate, benzyl bromoacetate, or 2-bromoacetamide; organic bromosulfone compounds, such as bistribromomethylsulfone; and 2-bromo-4'-hydroxyacetophenone, 2,5-dichloro-4-bromophenol, 2,4,6-tribromophenol, α-bromocinnamaldehyde and 2-hydroxyethyl-2,3-dibromopropionate, and alkyl bromide isoquinolium. Examples of the organic nitrogen halogen compound other than the organic nitrogen bromine compound include: alkyl (C8-C19) trimethyl ammonium halides, such as octyl trimethyl ammonium chloride, decyl trimethyl ammonium chloride, dodecyl trimethyl ammonium chloride, hexadecyl trimethyl ammonium chloride, or stearyltrimethyl ammonium chloride; dialkyl (C8-C18) dimethyl ammonium halides, such as octyldecyl dimethyl ammonium chloride, dioctyldimethyl ammonium chloride, didecyl dimethyl ammonium chloride, octyldodecyl dimethyl ammonium chloride, dihexadecyl dimethyl ammonium chloride, or dioctadecyl dimethyl ammonium chloride; and alkyl (C8-C18) benzyldimethyl ammonium halides, such as dodecyl dimethylbenzyl ammonium chloride, hexadecyl dimethylbenzyl ammonium chloride, or octadecyl dimethylbenzyl ammonium chloride. Moreover, examples of the organic nitrogen halogen compound include: halogenated oxime compounds, such as N,4-dihydroxy-α-oxobenzeneethane imidoyl chloride, α-chloro-o-acetoxy benzaldoxime, or α,4-dichlorobenzaldoxime; amide compounds such as 2-chloroacetamide; chlorinated isocyanuric acid compounds, such as dichloroisocyanate, sodium dichloroisocyanurate, or trichloroisocyanuric acid; quaternary ammonium compounds, such as dequalinium chloride, or benzalkonium chloride; carbamic acids or esters thereof, such as 3-iodo-2-propargylbutyl carbamic acid; imidazole compounds, such as 1-[2-(2,4-dichlorophenyl)]-2'-[(2,4-dichlorophenyl)methoxy]ethyl-3-(2-phenylethyl)-1H -imidazolium chloride, or 1-[2-(2,4-dichlorophenyl)-2-(2-propenyloxy)ethyl]-1H-imidazole; and 2,4,5,6-tetrachloroisophthalonitrile, 5-chloro-2,4,6,-trifluoroisophthalonitrile, 5-chloro-2,4-difluoro-6-methoxyisophthalonitrile, and poly[oxyethylene(dimethylimino)ethylene(dimethylimino)ethylene dichloride].

Examples of the organic nitrogen compound include: s-triazine compounds, such as hexahydro-1,3,5-tris-(2-ethyl)-s-triazine or hexahydro-1,3,5-tris-(2-hydroxyethyl)-s-triazine; carbamic acids or esters thereof, such as methyl 2-benzimidazolylcarbamate; amide compounds such as 2-(2-furyl)-3-(5-nitro-2-furyl)-acrylic acid amide; aminoalcohol compounds, such as N-(2-hydroxypropyl)-aminomethanol or 2-(hydroxymethylamino)ethanol; and N-(2-methyl-1-naphthyl)maleimide.

Examples of the organic sulfur compound include 3,3,4,4-tetrachlorotetrahydrothiophene-1,1-dioxide and 2-hydroxypropylmethane thiosulfonate.

Moreover, the cellulose fiber-containing composition of the present invention preferably comprises, as an antiseptic, only an antiseptic containing at least one type selected from a nitrogen atom, a sulfur atom and a halogen atom. However, known antiseptics, such as 3-acetoxy-1,1,2-triiodo-1-propene, glutardialdehyde, dichlorophene, hydrogen peroxide, and maleic anhydride, may also be used in combination, as necessary.

Among others, the antiseptic containing at least one type selected from a nitrogen atom, a sulfur atom and a halogen atom is preferably at least one type selected from a compound having an isothiocyanate structure, a compound having a heteroring containing, as a heteroatom, at least one type selected from a nitrogen atom and a sulfur atom, and a bromonitroalcohol compound. By using such a compound, the long-term storage of the cellulose fiber-containing composition becomes possible, and the viscosity and transparency equivalent to those before the storage can be easily maintained, even though the additive amount of the compound is small.

Specific examples of the above-described compounds will be given below.

[Formula 1]

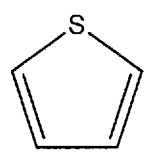
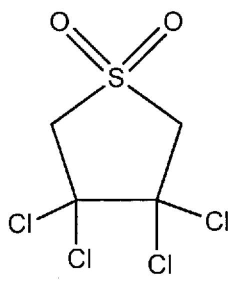
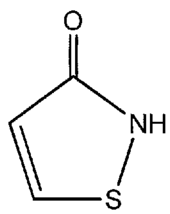
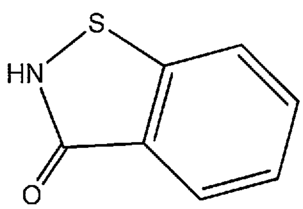
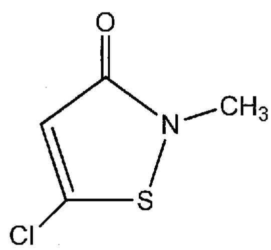
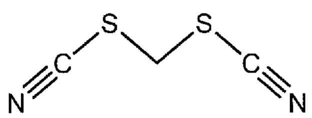
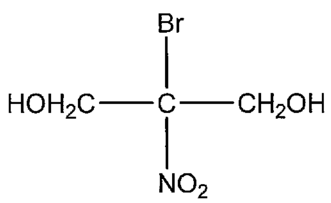
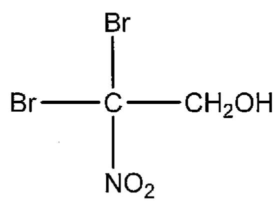

The antiseptic containing at least one type selected from a nitrogen atom, a sulfur atom and a halogen atom may be produced by synthesis, but a commercially available product may also be used. For example, SLC series (SLC795 and SLC755) and MLN series (MLN352, MLN460, and MLN553P), which are manufactured by KATAYAMA NALCO INC., can be used.

(Hydrophilic polymer)

The cellulose fiber-containing composition of the present invention may further comprise a hydrophilic polymer. In particular, when the cellulose fiber-containing composition is a slurry for use in sheet formation, it preferably comprises such a hydrophilic polymer. By allowing the slurry for use in sheet formation to comprise a hydrophilic polymer, an ultrafine cellulose fiber-containing sheet having high transparency and high mechanical strength can be obtained.

Examples of the hydrophilic polymer include polyethylene glycol, cellulose derivatives (hydroxyethyl cellulose, carboxyethyl cellulose, carboxymethyl cellulose, etc.), casein, dextrin, starch, modified starch, polyvinyl alcohol, modified polyvinyl alcohol (acetoacetylated polyvinyl alcohol, etc.), polyethylene oxide, polyvinylpyrrolidone, polyvinyl methyl ether, polyacrylates, polyacrylamide, acrylic acid alkyl ester copolymers, and urethane copolymers. Among others, the hydrophilic polymer is preferably at least one type selected from polyethylene glycol (PEG), polyvinyl alcohol (PVA), modified polyvinyl alcohol (modified PVA) and polyethylene oxide (PEO), and is more preferably polyethylene oxide (PEO).

The content of the hydrophilic polymer is preferably 0.5 parts by mass or more, more preferably 3 parts by mass or more, further preferably 5 parts by mass or more, and particularly preferably 10 parts by mass or more, with respect to 100 parts by mass of the cellulose fibers. On the other hand, the content of the hydrophilic polymer is preferably 50 parts by mass or less, more preferably 40 parts by mass or less, and further preferably 30 parts by mass or less, with respect to 100 parts by mass of the cellulose fibers.

The viscosity-average molecular weight of the hydrophilic polymer is not particularly limited, but it is preferably $1.0 \times 10^3$ or more and $1.0 \times 10^7$ or less, more preferably $2.0 \times 10^3$ or more and $1.0 \times 10^7$ or less, and further preferably $5.0 \times 10^3$ or more and $1.0 \times 10^7$ or less.

Moreover, the cellulose fiber-containing composition of the present invention preferably further comprises, as a hydrophilic polymer, polyamine polyamide epihalohydrin. Polyamine polyamide epihalohydrin is a cationic thermosetting resin obtained by subjecting aliphatic dibasic carboxylic acid or a derivative thereof and polyalkylene polyamine to heat condensation so as to synthesize polyamide polyamine, and then allowing the polyamide polyamine to react with epihalohydrin. Since the polyamine polyamide epihalohydrin is an aqueous resin, the polyamine polyamide epihalohydrin may be added in the form of an aqueous resin into a slurry for use in sheet formation.

Examples of the polyamine polyamide epihalohydrin include polyamine polyamide epichlorohydrin, polyamine polyamide epibromohydrin, and polyamine polyamide epiiodohydrin. Among these, polyamine polyamide epichlorohydrin (PAE) is preferably used.

The content of the polyamine polyamide epihalohydrin is preferably 0.1 part by mass or more, and more preferably 0.3 parts by mass or more, with respect to 100 parts by mass of the cellulose fibers. On the other hand, the content of the polyamine polyamide epihalohydrin is preferably 10 parts by mass or less, more preferably 5 parts by mass or less, and further preferably 3 parts by mass or less, with respect to 100 parts by mass of the cellulose fibers. In the case of adding such polyamine polyamide epihalohydrin, the content of the polyamine polyamide epihalohydrin is not included in the content of the aforementioned hydrophilic polymer. By setting the content of the polyamine polyamide epihalohydrin within the above-described range, the water resistance and transparency of the sheet can be enhanced.

(Thermoplastic resin)

The cellulose fiber-containing composition of the present invention may further comprise a thermoplastic resin. Examples of the thermoplastic resin include a styrene resin, an acrylic resin, an aromatic polycarbonate resin, an aliphatic polycarbonate resin, an aromatic polyester resin, an aliphatic polyester resin, an aliphatic polyolefin resin, a cyclic olefin resin, a polyamide resin, a polyphenylene ether resin, a thermoplastic polyimide resin, a polyacetal resin, a polysulfone resin, and an amorphous fluorine resin, but are not limited thereto. Among others, a thermoplastic resin constituting thermoplastic resin fibers is preferably an aromatic polyester resin, an aliphatic polyester resin, an aliphatic polyolefin resin, an aromatic polycarbonate resin, or an aliphatic polycarbonate resin. More specifically, the thermoplastic resin is preferably at least one type selected from, for example, polylactic acid, polybutylene succinate, an ethylene-vinyl alcohol copolymer, amorphous PET, polypropylene, acid-modified polypropylene, polycarbonate and polyethylene, and is more preferably at least one type selected from polypropylene and acid-modified polypropylene.

The thermoplastic resin may be a thermoplastic resin emulsion, but it is preferably an emulsion. When the thermoplastic resin is a thermoplastic resin fiber, the fiber length (number average fiber length) of the thermoplastic resin fiber is preferably 0.5 mm or more, more preferably 1 mm or more, and further preferably 3 mm or more. On the other hand, the fiber length (number average fiber length) of the thermoplastic resin fiber is preferably 100 mm or less, more preferably 50 mm or less, and further preferably 25 mm or less.

Moreover, the fiber diameter (number average fiber diameter) of the thermoplastic resin fiber is preferably 0.5 μm or more, more preferably 1 μm or more, and further preferably 3 μm or more. On the other hand, the fiber diameter (number average fiber diameter) of the thermoplastic resin fiber is preferably 50 μm or less, more preferably 25 μm or

less, and further preferably 15 μm or less.

The content of the thermoplastic resin is preferably 1 part by mass or more, and more preferably 3 parts by mass or more, with respect to 100 parts by mass of the cellulose fibers. On the other hand, the content of the thermoplastic resin is preferably 50 parts by mass or less, and more preferably 30 parts by mass or less, with respect to 100 parts by mass of the cellulose fibers. By adding the thermoplastic resin to the cellulose fiber-containing composition to result in the above-described content, the sheet can have flexibility.

(Optional component)

The cellulose fiber-containing composition of the present invention may comprise optional components other than the aforementioned components. Examples of such optional components may include antifoaming agents, lubricants, ultraviolet absorbing agents, dyes, pigments, stabilizers, and surfactants. Moreover, as such optional components, organic ions may also be added to the cellulose fiber-containing composition.

Furthermore, resins other than the aforementioned thermoplastic resin may also be added as such optional components. Examples of such resins other than the thermoplastic resin include a thermosetting resin and a photocurable resin. These resins may also be added in the form of an emulsion. Specific examples of such a thermosetting resin emulsion and a photocurable resin emulsion include those described in JPA-2009-299043.

(Sheet)

The present invention also relates to a sheet formed from the aforementioned cellulose fiber-containing composition. The sheet of the present invention comprises cellulose fibers having a fiber width of 1000 nm or less, and an antiseptic containing at least one type selected from a nitrogen atom, a sulfur atom and a halogen atom. Herein, the content of the antiseptic is 10% by mass or less, with respect to the total mass of the sheet. The content of the antiseptic is preferably 5 parts by mass or less, more preferably 3 parts by mass or less, even more preferably 1 part by mass or less, further preferably 0.5 parts by mass or less, particularly preferably 0.2 parts by mass or less, and most preferably 0.1 part by mass or less, with respect to the total mass of the sheet. On the other hand, the content of the antiseptic is preferably 0.0001 part by mass or more, with respect to the total mass of the sheet.

The tensile elastic modulus of the sheet of the present invention may be 2.5 GPa or more, and it is preferably 3.0 GPa or more, and more preferably 3.5 GPa or more. The upper limit value of the tensile elastic modulus of the sheet is not particularly limited, and it can be set at, for example, 50 GPa or less. Even in a case where the sheet of the present invention is formed from a slurry for use in sheet formation that has been left at rest at 50°C for 192 hours, the tensile elastic modulus of the sheet preferably satisfies the above-described conditions.

Herein, the tensile elastic modulus of the sheet is a value measured in accordance with JIS P 8113, using a tension testing machine "Tensilon" (manufactured by A & D Company, Limited). Upon the measurement of the tensile elastic modulus, a test piece to be measured was prepared by humidity conditioning for 24 hours at 23°C and a relative humidity of 50%, and the measurement was then carried out under conditions of 23°C and a relative humidity of 50%.

The haze of the sheet of the present invention is preferably 2% or less, more preferably 1.5% or less, and further preferably 1% or less. Moreover, the total light transmittance of the sheet of the present invention is preferably 85% or more, more preferably 90% or more, and further preferably 91% or more. Even in a case where the sheet of the present invention is formed from a slurry for use in sheet formation that has been left at rest at 50°C for 192 hours, the haze and the total light transmittance of the sheet preferably satisfy the above-described conditions.

Herein, the total light transmittance and the haze of the sheet are values measured in accordance with JIS K 7136, using a hazemeter (manufactured by MURAKAMI COLOR RESEARCH LABORATORY Co., Ltd.; HM-150).

The thickness of the sheet of the present invention is not particularly limited, and it is preferably 5 μm or more, more preferably 10 μm or more, and further preferably 20 μm or more. The upper limit value of the thickness of the sheet is not particularly limited, and it can be set at, for example, 1000 μm or less. Besides, the thickness of the sheet may be measured using a stylus thickness gauge (manufactured by Mahr; Millitron 1202 D).

The basis weight of the sheet of the present invention is preferably 10 $g/m^2$ or more, more preferably 20 $g/m^2$ or more, and further preferably 30 $g/m^2$ or more. On the other hand, the basis weight of the sheet is preferably 100 $g/m^2$ or less, and more preferably 80 $g/m^2$ or less. Herein, the basis weight of the sheet may be calculated in accordance with JIS P 8124.

(Method for producing sheet)

The step of producing a sheet comprises a step of obtaining a slurry comprising ultrafine cellulose fibers having a fiber width of 1000 nm or less and an antiseptic containing at least one type selected from a nitrogen atom, a sulfur atom and a halogen atom, and a step of applying this slurry onto a base material, or a step of papermaking from the

slurry. Herein, the antiseptic is added in an amount of 10% by mass or less with respect to the total mass of the sheet.

In the step of obtaining a slurry, the antiseptic containing at least one type selected from a nitrogen atom, a sulfur atom and a halogen atom may be added in an amount of 10 parts by mass or less, preferably 5 parts by mass or less, more preferably 3 parts by mass or less, even more preferably 1 part by mass or less, further preferably 0.5 parts by mass or less, particularly preferably 0.2 parts by mass or less, and most preferably 0.1 part by mass or less, with respect to 100 parts by mass of ultrafine cellulose fibers comprised in the slurry.

In the step of obtaining a slurry, the antiseptic containing at least one type selected from a nitrogen atom, a sulfur atom and a halogen atom may be added in an amount of 10 parts by mass or less, preferably 5 parts by mass or less, more preferably 3 parts by mass or less, even more preferably 1 part by mass or less, further preferably 0.5 parts by mass or less, particularly preferably 0.2 parts by mass or less, and most preferably 0.1 part by mass or less, with respect to 100 parts by mass of ultrafine cellulose fibers comprised in the slurry.

In the step of obtaining a slurry, it is preferable to further add a hydrophilic polymer to the slurry. In addition, other than the hydrophilic polymer, polyamine polyamide epihalohydrin or a thermoplastic resin may also be added. Thus, by adding a hydrophilic polymer and the like to the slurry, a sheet having excellent transparency and mechanical strength can be formed.

< Coating step >

The coating step is a step of applying the slurry obtained in the step of obtaining a slurry onto a base material, drying the slurry to form a sheet, and then detaching the sheet from the base material to obtain a sheet. Use of a coating apparatus and a long base material can continuously produce sheets.

The quality of the base material used in the coating step is not particularly limited. Although a base material having higher wettability to the slurry is preferable because shrinkage of the sheet or the like upon drying is suppressed, it is preferable to select one from which a sheet formed after drying can be easily detached. Of these, a resin plate or a metal plate is preferable, without particular limitation. Examples of the base material that can be used herein include resin plates such as acrylic plates, polyethylene terephthalate plates, vinyl chloride plates, polystyrene plates, and polyvinylidene chloride plates; metal plates such as aluminum plates, zinc plates, copper plates, and iron plates; plates obtained by the oxidation treatment of surface thereof; and stainless plates and brass plates.

When the slurry has a low viscosity and spreads on the base material in the coating step, a damming frame may be fixed and used on the base material in order to obtain a sheet having a predetermined thickness and basis weight. The quality of the damming frame is not particularly limited, but it is preferable to select ones from which edges of the sheet adhere after drying can be easily detached. Of these, frames formed from resin plates or metal plates are preferable, without particular limitation. Example thereof that can be used herein include frames formed from resin plates such as acrylic plates, polyethylene terephthalate plates, vinyl chloride plates, polystyrene plates, and polyvinylidene chloride plates; from metal plates such as aluminum plates, zinc plates, copper plates, and iron plates; from plates obtained by the oxidation treatment of surface thereof; and from stainless plates and brass plates.

Examples of a coater for applying the slurry that can be used herein include roll coaters, gravure coaters, die coaters, curtain coaters, and air doctor coaters. Die coaters, curtain coaters, and spray coaters are preferable because more even thickness can be provided.

The coating temperature is not particularly limited, but it is preferably 20°C or higher and 45°C or lower, more preferably 25°C or higher and 40°C or lower, and further preferably 27°C or higher and 35°C or lower. When the coating temperature is equal to or higher than the above-described lower limit value, it is possible to easily apply the slurry. When the coating temperature is equal to or lower than the above-described upper limit value, it is possible to suppress volatilization of the dispersion medium upon coating.

In the coating step, it is preferable to apply the slurry so as to achieve a finished basis weight of the sheet that is 10 $g/m^2$ or more and 100 $g/m^2$ or less, and preferably, 20 $g/m^2$ or more and 60 $g/m^2$ or less. By applying the slurry so as to achieve a basis weight that is within the above-described range, a sheet having excellent strength can be obtained.

The coating step preferably includes a step of drying the slurry applied onto the base material. The drying method is not particularly limited, but any of a contactless drying method and a method of drying the sheet while locking the sheet may be used, or these methods may also be used in combination.

The contactless drying method is not particularly limited, but a method for drying by heating with hot air, infrared radiation, far-infrared radiation, or near-infrared radiation (a drying method by heating) or a method for drying in vacuum (a vacuum drying method) can be utilized. Although the drying method by heating and the vacuum drying method may be combined, the drying method by heating is usually utilized. The drying with infrared radiation, far-infrared radiation, or near-infrared radiation can be performed using an infrared apparatus, a far-infrared apparatus, or a near-infrared apparatus without particular limitations. The heating temperature for the drying method by heating is not particularly limited, but it is preferably 20°C or higher and 150°C or lower, and more preferably 25°C or higher and 105°C or lower. At the heating temperature equal to or higher than the above-described lower limit value, the dispersion medium can

be rapidly volatilized. At the heating temperature equal to or lower than the above-described upper limit value, cost required for the heating can be reduced, and the thermal discoloration of the ultrafine cellulose fibers can be suppressed.

< Papermaking step >

The step of producing a sheet may include a step of papermaking from a slurry. Examples of a paper machine used in the papermaking step include continuous paper machines such as a Fourdrinier paper machine, a cylinder paper machine, and an inclined paper machine, and a multilayer combination paper machine, which is a combination thereof. Known papermaking such as papermaking by hand may be carried out in the papermaking step.

In the papermaking step, the slurry is wire-filtered and dehydrated to obtain a sheet that is in a wet state. The sheet is then pressed and dried to obtain a sheet. Upon filtration and dehydration of the slurry, a filter fabric for filtration is not particularly limited. It is important that ultrafine cellulose fibers or antiseptics do not pass through the filter fabric and the filtration speed is not excessively slow. Such filter fabric is not particularly limited, and a sheet consisting of an organic polymer, a woven fabric, or a porous membrane is preferable. Preferred examples of the organic polymer include, but are not particularly limited to, non-cellulose organic polymers such as polyethylene terephthalate, polyethylene, polypropylene, and polytetrafluoroethylene (PTFE). Specific examples thereof include, but are not particularly limited to, a polytetrafluoroethylene porous membrane having a pore size of 0.1 μm or more and 20 μm or less, for example, 1 μm, and woven fabric made of polyethylene terephthalate or polyethylene having a pore size of 0.1 μm or more and 20 μm or less, for example, 1 μm.

A method for producing a sheet from a slurry is not particularly limited, but an example thereof is the method disclosed in WO 2011/013567 comprising using a production apparatus. This production apparatus comprises a dewatering section for ejecting an ultrafine cellulose fiber-containing slurry onto the upper surface of an endless belt and then dewatering a dispersion medium contained in the ejected slurry to form a web, and a drying section for drying the web to produce a fiber sheet. The endless belt is provided across from the dewatering section to the drying section, and the web formed in the dewatering section is transferred to the drying section while being placed on the endless belt.

The dehydration method that can be adopted in the present invention is not particularly limited. An example of the method is a dehydration method conventionally used for paper production. A preferred example is a method comprising performing dehydration using a Fourdrinier, cylinder, tilted wire, or the like and then performing dehydration using a roll press. In addition, a drying method is not particularly limited, but an example thereof is a method used for paper production and for example a method using a cylinder dryer, a yankee dryer, hot air drying, a near-infrared heater, or an infrared heater is preferable.

(Laminate)

A laminate may be formed by further laminating an additional layer on the sheet obtained in the aforementioned step. Such an additional layer may be provided on both surfaces of the sheet, or may also be provided on one surface of the sheet. Examples of the additional layer that is laminated on at least one surface of the sheet may include a resin layer and an inorganic layer.

Specific examples of the laminate may include a laminate in which a resin layer is directly laminated on at least one surface of a sheet, a laminate in which an inorganic layer is directly laminated on at least one surface of a sheet, a laminate in which a resin layer, a sheet and an inorganic layer are laminated in this order, a laminate in which a sheet, a resin layer and an inorganic layer are laminated in this order, and a laminate in which a sheet, an inorganic layer and a resin layer are laminated in this order. The layer configuration of the laminate is not limited to the above-described examples, and the laminate can have various aspects depending on intended use.

< Resin layer >

The resin layer is a layer that has a natural resin or a synthetic resin as a main component. In this context, the main component refers to a component comprised in 50% by mass or more, based on the total mass of the resin layer. The content of the resin is preferably 60% by mass or more, more preferably 70% by mass or more, further preferably 80% by mass or more, and particularly preferably 90% by mass or more, based on the total mass of the resin layer. It is to be noted that the content of the resin may be set at 100% by mass, or may also be set at 95% by mass or less.

Examples of natural resins may include rosin-based resins, such as rosin, rosin ester and hydrated rosin ester.

The synthetic resin is preferably at least one selected from, for example, polycarbonate resins, polyethylene terephthalate resins, polyethylene naphthalate resins, polyethylene resins, polypropylene resins, polyimide resins, polystyrene resins, polyurethane resins and acrylic resins. Among them, the synthetic resin is preferably at least one selected from polycarbonate resins and acrylic resins, and more preferably a polycarbonate resin. It is to be noted that the acrylic resin is preferably at least any one selected from polyacrylonitrile and poly(meth)acrylate.

Examples of the polycarbonate resin, which constitutes the resin layer, include aromatic polycarbonate-based resins and aliphatic polycarbonate-based resins. These specific polycarbonate-based resins are known, and a polycarbonate-based resin described in JP-A-2010-023275 is included, for example.

One resin that constitutes the resin layer may be used alone, or a copolymer obtained by copolymerization or graft polymerization of a plurality of resin components may be used. Alternatively, a plurality of resin components may be mixed by a physical process and used as a blend material.

An adhesive layer may be provided between the sheet and the resin layer, or the sheet and the resin layer may directly adhere to each other without providing an adhesive layer. When an adhesive layer is provided between the sheet and the resin layer, examples of adhesives, which constitute the adhesive layer, may include acrylic resins. Examples of adhesives other than acrylic resins include vinyl chloride resins, (meth)acrylic acid ester resins, styrene/acrylic acid ester copolymer resins, vinyl acetate resins, vinyl acetate/(meth)acrylic acid ester copolymer resins, urethane resins, silicone resins, epoxy resins, ethylene/vinyl acetate copolymer resins, polyester-based resins, polyvinyl alcohol resins, ethylene vinyl alcohol copolymer resins, and rubber-based emulsions such as SBR and NBR.

When no adhesive layer is provided between the sheet and the resin layer, the resin layer may have an adhesion aid, or the surface of the resin layer may be surface-treated by a hydrophilization treatment or the like.

Examples of the adhesion aid may include compounds containing at least one selected from an isocyanate group, a carbodiimide group, an epoxy group, an oxazoline group, an amino group and a silanol group, and organic silicon compounds. Among them, the adhesion aid is preferably at least one selected from a compound containing an isocyanate group (isocyanate compound) and an organic silicon compound. Examples of the organic silicon compound may include silane coupling agent condensates and silane coupling agents.

Examples of the surface treatment method other than the hydrophilic treatment may include a corona treatment, a plasma discharge treatment, a UV irradiation treatment, an electron beam irradiation treatment, and a flame treatment.

< Inorganic layer >

Substances constituting the inorganic layer are not particularly limited, but examples thereof include aluminum, silicon, magnesium, zinc, tin, nickel, and titanium; oxides, carbides, nitrides, oxycarbides, oxynitrides, and oxycarbonitrides thereof; and mixtures thereof. From the viewpoint that high moisture resistance can be stably maintained, silicon oxide, silicon nitride, silicon oxycarbide, silicon oxynitride, silicon oxycarbonitride, aluminum oxide, aluminum nitride, aluminum oxycarbide, aluminum oxynitride, or mixtures thereof are preferable.

A method for forming an inorganic layer is not particularly limited. In general, methods of forming a thin film are roughly classified into Chemical Vapor Deposition (CVD) and Physical Vapor Deposition (PVD), either of which may be employed. Specific examples of CVD methods include plasma CVD, which utilizes plasma, and Catalyst Chemical Vapor Deposition (Cat-CVD) including catalytically cracking material gas using a heated catalyzer. Specific examples of PVD methods include vacuum deposition, ion plating, and sputtering.

As a method for forming an inorganic layer, Atomic Layer Deposition (ALD) can also be employed. The ALD method is a method for forming a thin film in an atomic layer unit by alternately supplying each of source gases of elements constituting the film to be formed to the surface on which a layer is to be formed. This method, albeit disadvantageous in a slow deposition rate, can more smoothly cover even a surface having a complicated shape than the plasma CVD method and has the advantage that a thin film having fewer defects can be formed. The ALD method also has the advantage that this method can control a film thickness at a nano order and can relatively easily cover a wide surface, for example. The ALD method can be further expected to improve a reaction rate, to achieve a low-temperature process, and to decrease unreacted gas, by using plasma.

(Intended use)

The cellulose fiber-containing composition of the present invention can be used, for example, as a thickener for various intended uses. In addition, the present cellulose fiber-containing composition is mixed with a resin or an emulsion, so that it can also be used as a reinforcing material. Otherwise, a slurry of the cellulose fiber-containing composition may be used to form a film, and thus, various types of sheets may be produced.

Such a sheet is suitable for intended uses, such as light transmissive substrates for various display devices, various solar cells, and the like. In addition, the sheet of the present invention is also suitable for intended uses, such as substrates of electronic devices, components of consumer electronics, window materials of various types of vehicles or buildings, interior materials, exterior materials, and wrapping materials. Moreover, the sheet of the present invention is also suitable for intended uses, such as threads, filters, woven fabrics, buffering materials, sponges, and polishing materials, and also, other intended uses, in which the sheet itself is used as a reinforcing material.

Examples

The characteristics of the present invention will be more specifically described in the following examples and comparative examples. The materials, used amounts, ratios, treatment contents, treatment procedures, etc. can be appropriately modified, unless they are deviated from the gist of the present invention. Accordingly, the scope of the present invention should not be restrictively interpreted by the following specific examples.

[Example 1]

< Production of phosphoric acid group-introduced cellulose fibers >

Pulp manufactured by Oji Paper Co., Ltd. (solid content: 93% by mass, basis weight: 208 g/$m^2$, sheet-shaped, Canadian Standard Freeness (CSF) measured according to JIS P 8121 after defibration: 700 ml) was used as needle bleached kraft pulp. 100 Parts by mass (absolute dry mass) of the needle bleached kraft pulp were impregnated with a mixed aqueous solution of ammonium dihydrogen phosphate and urea, and were then compressed to result in 49 parts by mass of the ammonium dihydrogen phosphate and 130 parts by mass of the urea, so as to obtain chemical-impregnated pulp. The obtained chemical-impregnated pulp was dried in a dryer of 105°C for moisture evaporation to pre-dry the chemical-impregnated pulp. Then, the chemical-impregnated pulp was heated in an air-blow dryer set at 140°C for 10 minutes, so that a phosphoric acid group was introduced into cellulose in the pulp to obtain phosphorylated pulp. 10000 Parts by mass of ion exchange water were poured onto 100 parts by mass (absolute dry mass) of the obtained phosphorylated pulp, which was then uniformly dispersed by stirring, followed by filtration and dehydration to obtain a dehydrated sheet. This step was repeated twice to obtain phosphoric acid modified cellulose fibers. Subsequently, 5000 ml of ion exchange water was added to the cellulose into which the phosphoric acid group had been introduced, and the resultant mixture was stirred and washed, and then dehydration was carried out. The dehydrated pulp was diluted with 5000 ml of ion exchange water, and a 1 N aqueous solution of sodium hydroxide was gradually added, while stirring, until the pH became 12 or more and 13 or less, so as to obtain a pulp dispersion. Then, this pulp dispersion was dehydrated and washed with 5000 ml of ion exchange water. This dehydration and washing was repeated one more time. The amount of phosphoric acid groups introduced into the obtained phosphoric acid modified cellulose fibers was 1.29 mmol/g. In addition, the obtained phosphoric acid modified cellulose fibers had a fiber width of approximately 4 to 20 nm.

< Mechanical treatment >

Ion exchange water was added to the pulp obtained after the washing and dehydration to produce a pulp suspension having a solid concentration of 1.0% by mass. This pulp suspension was treated using a wet atomization apparatus (manufactured by Sugino Machine Limited; Ultimizer,) at a pressure of 245 MPa five times to obtain an ultrafine cellulose fiber suspension.

< Dissolving of polyethylene oxide >

Polyethylene oxide (manufactured by SUMITOMO SEIKA CHEMICALS CO., LTD.; PEO-18P) was added to ion exchange water to result in an amount of 2% by mass, and the mixture was then stirred, so that polyethylene oxide was dissolved therein.

< Antiseptic >

As antiseptics, SLC series (SLC795 and SLC755) and MLN series (MLN352, MLN460 and MLN553P), which are manufactured by KATAYAMA NALCO INC., were used. Hereafter, Antiseptic 1 indicates SLC795, Antiseptic 2 indicates SLC755, Antiseptic 3 indicates MLN352, Antiseptic 4 indicates MLN460, and Antiseptic 5 indicates MLN553P.

[Table 1]

| | Product name | Component | | |
|---|---|---|---|---|
| Antiseptic 1 | SLC795 | 2,2-Dibromo-3-nitrilopropionamide | Cyclic organic sulfur compound | Solvent |
| Antiseptic 2 | SLC755 | 2,2-Dibromo-3-nitrilopropionamide | Organic nitrogen sulfur compound | Solvent |

(continued)

| | Product name | Component | | |
|---|---|---|---|---|
| Antiseptic 3 | MLN352 | 2,2-Dibromo-3-nitrilopropionamide | Organic nitrogen sulfur compound | Solvent |
| Antiseptic 4 | MLN460 | Solvent | Organic nitrogen bromine compound | - |
| Antiseptic 5 | MLN553P | Ethylene glycol | Cyclic organic nitrogen sulfur compound | - |

Besides, 2,2-dibromo-3-nitrilopropionamide shown in Table 1 is classified into the organic nitrogen halogen compound.

< Preparation of slurry >

A polyethylene oxide (PEO) solution and Antiseptic 1 were added to an ultrafine cellulose fiber suspension to prepare a slurry (ultrafine cellulose fiber-containing slurry), in which 20 parts by mass of polyethylene oxide and 0.0024 parts by mass of Antiseptic 1 could be used with respect to 100 parts by mass of ultrafine cellulose fibers. Besides, the concentration of the solid in the slurry was adjusted to be 1.8% by mass.

< Sheet formation >

The concentration of a solid in the slurry was adjusted to be 0.6% by mass. This slurry was divided into three vessels, and one of the three vessels was subjected to sheet formation without being left at rest at 50°C. Two other vessels were left at rest at 50°C, and after 96 hours or 192 hours later had passed, the vessels were subjected to the procedures of sheet formation. In such sheet formation, each slurry was weighed so that the finished basis weight of the sheet became 50 g/$m^2$, was then developed onto a commercially available acrylic plate, and was then dried with a dryer at 70°C for 24 hours. Here, a plate for damming was arranged on the acrylic plate so as to have a predetermined basis weight. As a result of the above procedures, a sheet was obtained, and its thickness was 30 μm.

[Example 2]

A slurry was obtained in the same manner as that of Example 1, with the exception that Antiseptic 1 was changed to Antiseptic 2.

[Example 3]

A slurry was obtained in the same manner as that of Example 1, with the exception that Antiseptic 1 was changed to Antiseptic 3.

[Example 4]

A slurry was obtained in the same manner as that of Example 1, with the exceptions that Antiseptic 1 was changed to Antiseptic 4, and that the additive amount of Antiseptic 4 was set at 0.012 parts by mass.

[Example 5]

A slurry was obtained in the same manner as that of Example 4, with the exception that the additive amount of Antiseptic 4 was set at 0.06 parts by mass.

[Example 6]

A slurry was obtained in the same manner as that of Example 4, with the exception that the additive amount of Antiseptic 4 was set at 0.18 parts by mass.

[Example 7]

A slurry was obtained in the same manner as that of Example 1, with the exceptions that Antiseptic 1 was changed to Antiseptic 5, and that the additive amount of Antiseptic 5 was set at 0.024 parts by mass.

[Example 8]

A slurry was obtained in the same manner as that of Example 7, with the exception that the additive amount of Antiseptic 5 was set at 0.096 parts by mass.

[Example 9]

A slurry was obtained in the same manner as that of Example 7, with the exception that the additive amount of Antiseptic 5 was set at 0.18 parts by mass.

[Example 10]

< Dissolving of polyamine polyamide epichlorohydrin (PAE) >

Polyamine polyamide epichlorohydrin (manufactured by SEIKO PMC CORPORATION; Wet Strength Agent WS4030) was added to ion exchange water to result in an amount of 1.8% by mass, and the mixture was then stirred, so that polyamine polyamide epichlorohydrin was dissolved therein.

< Production of polypropylene (PP) emulsion >

Polypropylene (manufactured by TOHO Chemical Industry Co., Ltd.; HYTEC P-5060P) was added to ion exchange water to result in an amount of 1.8% by mass, and the mixture was then stirred, so that polypropylene was dissolved therein.

A polyethylene oxide (PEO) solution, a polyamine polyamide epichlorohydrin (PAE) solution, a polypropylene (PP) emulsion, and Antiseptic 1 were added to an ultrafine cellulose fiber suspension, so as to prepare a slurry, in which 20 parts by mass of polyethylene oxide, 0.5 parts by mass of polyamine polyamide epichlorohydrin, 10 parts by mass of polypropylene, and 0.0024 parts by mass of Antiseptic 1 could be used with respect to 100 parts by mass of ultrafine cellulose fibers. Besides, the concentration of a solid in the slurry was adjusted to be 1.8% by mass.

Upon sheet formation, the concentration was adjusted, so that the solid concentration became 0.6% by mass. This slurry was divided into three vessels, and one of the three vessels was subjected to sheet formation without being left at rest at 50°C. Two other vessels were left at rest at 50°C, and after 96 hours or 192 hours had passed, the vessels were subjected to the procedures of sheet formation. In such sheet formation, each slurry was weighed so that the finished basis weight of the sheet became 50 g/$m^2$, was then developed onto a commercially available acrylic plate, and was then dried with a dryer at 70°C for 24 hours. Here, a plate for damming was arranged on the acrylic plate so as to have a predetermined basis weight. As a result of the above procedures, a sheet was obtained, and its thickness was 30 $\mu$m.

[Example 11]

A slurry and a sheet were obtained in the same manner as that of Example 10, with the exception that Antiseptic 1 was changed to Antiseptic 2.

[Example 12]

A slurry was obtained in the same manner as that of Example 10, with the exception that Antiseptic 1 was changed to Antiseptic 3.

[Example 13]

A slurry was obtained in the same manner as that of Example 10, with the exceptions that Antiseptic 1 was changed to Antiseptic 4, and that the additive amount of Antiseptic 4 was set at 0.012 parts by mass.

[Example 14]

A slurry was obtained in the same manner as that of Example 13, with the exception that the additive amount of Antiseptic 4 was set at 0.06 parts by mass.

[Example 15]

A slurry was obtained in the same manner as that of Example 13, with the exception that the additive amount of Antiseptic 4 was set at 0.18 parts by mass.

[Example 16]

A slurry was obtained in the same manner as that of Example 10, with the exceptions that Antiseptic 1 was changed to Antiseptic 5, and that the additive amount of Antiseptic 5 was set at 0.024 parts by mass.

[Example 17]

A slurry was obtained in the same manner as that of Example 16, with the exception that the additive amount of Antiseptic 5 was set at 0.096 parts by mass.

[Example 18]

A slurry was obtained in the same manner as that of Example 16, with the exception that the additive amount of Antiseptic 5 was set at 0.18 parts by mass.

[Example 19]

Undried needle bleached kraft pulp corresponding to a dry mass of 100 parts by mass, 1.6 parts by mass of TEMPO, and 10 parts by mass of sodium bromide were dispersed in 10000 parts by mass of water. Subsequently, an aqueous solution containing 13% by mass of sodium hypochlorite was added thereto, such that the amount of sodium hypochlorite became 3.5 mmol with respect to 1.0 g of the pulp, to start reaction. During the reaction, the pH was kept at pH 10 or more and pH 11 or less by the dropwise addition of a 1.0 M sodium hydroxide aqueous solution. The point in time when change in pH was no longer seen was considered to be termination of the reaction, and carboxyl groups were introduced into the pulp. Thereafter, this pulp slurry was dehydrated to obtain a dehydrated sheet, and 5000 parts by mass of ion exchange water were poured onto the pulp, which was then uniformly dispersed by stirring, and then, filtration and dehydration were performed on the resultant to obtain a dehydrated sheet. This step was repeated twice, so as to obtain carboxyl group modified cellulose fibers. The amount of carboxyl groups introduced into the obtained carboxyl group modified cellulose fibers was 1.01 mmol/g. A slurry was obtained in the same manner as that of Example 6, with the exception that the obtained carboxyl group modified cellulose fibers were used as ultrafine cellulose fibers.

[Example 20]

A slurry was obtained in the same manner as that of Example 1, with the exception that a polyethylene oxide (PEO) solution was not added in < Preparation of slurry > in Example 1.

[Example 21]

A slurry was obtained in the same manner as that of Example 20, with the exception that Antiseptic 1 was changed to Antiseptic 2.

[Example 22]

A slurry was obtained in the same manner as that of Example 20, with the exception that Antiseptic 1 was changed to Antiseptic 3.

[Example 23]

A slurry was obtained in the same manner as that of Example 20, with the exceptions that Antiseptic 1 was

changed to Antiseptic 4, and that the additive amount of Antiseptic 4 was set at 0.18 parts by mass.

[Example 24]

A slurry was obtained in the same manner as that of Example 20, with the exceptions that Antiseptic 1 was changed to Antiseptic 5, and that the additive amount of Antiseptic 5 was set at 0.18 parts by mass.

[Comparative Example 1]

A slurry was obtained in the same manner as that of Example 1, with the exception that an antiseptic was not added.

[Comparative Example 2]

A slurry was obtained in the same manner as that of Example 10, with the exception that an antiseptic was not added.

[Comparative Example 3]

A slurry was obtained in the same manner as that of Example 4, with the exception that the additive amount of Antiseptic 4 was set at 50 parts by mass.

[Comparative Example 4]

A slurry was obtained in the same manner as that of Example 10, with the exception that the additive amount of Antiseptic 4 was set at 50 parts by mass.

[Comparative Example 5]

A slurry was obtained in the same manner as that of Example 19, with the exception that an antiseptic was not added.

[Evaluation]

The slurries and sheets produced in Examples and Comparative Examples were evaluated according to the following evaluation methods.

(1) Measurement of amount of substituent on surface of cellulose (titration method)

The amount of the phosphoric acid group introduced was measured by diluting the cellulose with ion exchange water to a content of 0.2% by mass, then treating with an ion exchange resin, and titrating with alkali. In the treatment with the ion exchange resin, 1/10 by volume of a strongly acidic ion exchange resin (manufactured by Organo Corporation; Amberjet 1024; conditioned) was added to a slurry containing 0.2% by mass of the cellulose, and the resultant mixture was shaken for 1 hour. Then, the mixture was poured onto a mesh having 90-μm apertures to separate the resin from the slurry. In the alkali titration, the change in the electric conductivity value indicated by the slurry was measured while adding a 0.1 N aqueous solution of sodium hydroxide to the slurry containing cellulose fibers after the ion exchange. Specifically, the alkali amount (mmol) required in the first region of the curve shown in Figure 1 was divided by the solid content (g) in the slurry to be titrated, and the obtained value was taken as the amount (mmol/g) of the substituent introduced.

With regard to the amount of the carboxyl group introduced, the alkali amount (mmol) required in the first region of the curve shown in Figure 2 (carboxyl group) was divided by the solid content (g) in the slurry to be titrated, and the obtained value was taken as the amount (mmol/g) of the substituent introduced.

(2) Measurement of total light transmittance

The obtained slurry was left at rest at 50°C, and then, 1 day, 2 days, 4 days, 8 days, 16 days, or 20 days later, the total light transmittance thereof was measured. On the other hand, the total light transmittance of a slurry that had not been left at rest at 50°C (50°C, 0 day) was also measured. In addition, the total light transmittance of each of the

three types of sheets (time for leaving at rest at 50°C: 0 hour, 96 hours, or 192 hours) obtained in Examples and Comparative Examples was also measured.

The total light transmittance of a sheet was measured in accordance with JIS K 7361, using a hazemeter (manufactured by MURAKAMI COLOR RESEARCH LABORATORY Co., Ltd.; HM-150). The total light transmittance of a slurry was measured by leaving the slurry at 50°C for the aforementioned period of time and then by setting the solid concentration of the slurry at 0.2% by mass, according to JIS K 7361. Upon the measurement, the slurry was placed in a glass cell for liquid having an optical path length of 1 cm (manufactured by Fujiwara Scientific Co., Ltd.; MG-40; inverse optical path) and was then measured. The zero point was measured with ion exchange water which was placed in the glass cell.

(3) Measurement of haze

The obtained slurry was left at rest at 50°C, and then, 1 day, 2 days, 4 days, 8 days, 16 days, or 20 days later, the haze thereof was measured. On the other hand, the haze of a slurry that had not been left at rest at 50°C (50°C, 0 day) was also measured. In addition, the haze of each of the three types of sheets (time for leaving at rest at 50°C: 0 hour, 96 hours, or 192 hours) obtained in Examples and Comparative Examples was also measured.

The haze of a sheet was measured in accordance with JIS K 7136, using a hazemeter (manufactured by MURAKAMI COLOR RESEARCH LABORATORY Co., Ltd.; HM-150). The haze of a slurry was measured by leaving the slurry at 50°C for the aforementioned period of time and then by setting the solid concentration of the slurry at 0.2% by mass, according to JIS K 7361. Upon the measurement, the slurry was placed in a glass cell for liquid having an optical path length of 1 cm (manufactured by Fujiwara Scientific Co., Ltd.; MG-40; inverse optical path) and was then measured. The zero point was measured with ion exchange water which was placed in the glass cell.

(4) Measurement of viscosity

The obtained slurry was left at rest at 50°C, and then, 1 day, 2 days, 4 days, 8 days, 16 days, or 20 days later, the viscosity thereof was measured. On the other hand, the viscosity of a slurry that had not been left at rest at 50°C (50°C, 0 day) was also measured. The measurement of viscosity was carried out using a type B viscometer (No. 4 roter) (manufactured by BROOKFIELD; analog viscometer T-LVT) under conditions of 25°C, a rotation number of 3 rpm, and a measurement time of 3 minutes. Besides, the solid concentration of the slurry, which was used in the measurement of viscosity, was 1.8% by mass.

(5) Measurement of tensile properties

The tensile elastic modulus of each of the three types of sheets (time for leaving at rest at 50°C: 0 hour, 96 hours, or 192 hours) obtained in Examples and Comparative Examples was measured.

The tensile elastic modulus was measured in accordance with JIS P 8113, using a tension testing machine "Tensilon" (manufactured by A & D Company, Limited). Upon the measurement of the tensile elastic modulus, a test piece prepared by humidity conditioning for 24 hours at 23°C and a relative humidity of 50% was used.

[Table 2]

| | Functional group | Amount of functional group introduced [mmol/g] | Fiber diameter [nm] | Antiseptic | Mixing ratio (part by mass) | | | | | Content [mass % to sheet] | | |
|---|---|---|---|---|---|---|---|---|---|---|---|---|
| | | | | | CNF | PEO | PAE | PP | Antiseptic | CNF | PEO | Antiseptic |
| Ex. 1 | Phosphoric acid group | 1.29 | 4-20 | Antiseptic 1 | 100 | 20 | 0 | 0 | 0.0024 | 83.3 | 16.7 | 0.0020 |
| Ex. 2 | Phosphoric acid group | 1.29 | 4-20 | Antiseptic 2 | 100 | 20 | 0 | 0 | 0.0024 | 83.3 | 16.7 | 0.0020 |
| Ex. 3 | Phosphoric acid group | 1.29 | 4-20 | Antiseptic 3 | 100 | 20 | 0 | 0 | 0.0024 | 83.3 | 16.7 | 0.0020 |
| Ex. 4 | Phosphoric acid group | 1.29 | 4-20 | Antiseptic 4 | 100 | 20 | 0 | 0 | 0.012 | 83.3 | 16.7 | 0.0100 |
| Ex. 5 | Phosphoric acid group | 1.29 | 4-20 | Antiseptic 4 | 100 | 20 | 0 | 0 | 0.06 | 83.3 | 16.7 | 0.0500 |
| Ex. 6 | Phosphoric acid group | 1.29 | 4-20 | Antiseptic 4 | 100 | 20 | 0 | 0 | 0.18 | 83.2 | 16.6 | 0.1498 |
| Ex. 7 | Phosphoric acid group | 1.29 | 4-20 | Antiseptic 5 | 100 | 20 | 0 | 0 | 0.024 | 83.3 | 16.7 | 0.0200 |
| Ex. 8 | Phosphoric acid group | 1.29 | 4-20 | Antiseptic 5 | 100 | 20 | 0 | 0 | 0.096 | 83.3 | 16.7 | 0.0799 |
| Ex. 9 | Phosphoric acid group | 1.29 | 4-20 | Antiseptic 5 | 100 | 20 | 0 | 0 | 0.18 | 83.2 | 16.6 | 0.1498 |
| Ex.10 | Phosphoric acid group | 1.29 | 4-20 | Antiseptic 1 | 100 | 20 | 0.5 | 10 | 0.0024 | 76.6 | 15.3 | 0.0018 |
| Ex.11 | Phosphoric acid group | 1.29 | 4-20 | Antiseptic 2 | 100 | 20 | 0.5 | 10 | 0.0024 | 76.6 | 15.3 | 0.0018 |
| Ex.12 | Phosphoric acid group | 1.29 | 4-20 | Antiseptic 3 | 100 | 20 | 0.5 | 10 | 0.0024 | 76.6 | 15.3 | 0.0018 |
| Ex.13 | Phosphoric acid group | 1.29 | 4-20 | Antiseptic 4 | 100 | 20 | 0.5 | 10 | 0.012 | 76.6 | 15.3 | 0.0092 |
| Ex.14 | Phosphoric acid group | 1.29 | 4-20 | Antiseptic 4 | 100 | 20 | 0.5 | 10 | 0.06 | 76.6 | 15.3 | 0.0460 |

(continued)

| | Functional group | Amount of functional group introduced [mmol/g] | Fiber diameter [nm] | Antiseptic | Mixing ratio (part by mass) | | | | | Content [mass % to sheet] | | |
|---|---|---|---|---|---|---|---|---|---|---|---|---|
| | | | | | CNF | PEO | PAE | PP | Antiseptic | CNF | PEO | Antiseptic |
| Ex.15 | Phosphoric acid group | 1.29 | 4-20 | Antiseptic 4 | 100 | 20 | 0.5 | 10 | 0.18 | 76.5 | 15.3 | 0.1377 |
| Ex.16 | Phosphoric acid group | 1.29 | 4-20 | Antiseptic 5 | 100 | 20 | 0.5 | 10 | 0.024 | 76.6 | 15.3 | 0.0184 |
| Ex.17 | Phosphoric acid group | 1.29 | 4-20 | Antiseptic 5 | 100 | 20 | 0.5 | 10 | 0.096 | 76.6 | 15.3 | 0.0735 |
| Ex.18 | Phosphoric acid group | 1.29 | 4-20 | Antiseptic 5 | 100 | 20 | 0.5 | 10 | 0.18 | 76.5 | 15.3 | 0.1377 |
| Ex. 19 | Carboxyl group | 1.01 | 4-20 | Antiseptic 4 | 100 | 20 | 0 | 0 | 0.18 | 83.2 | 16.6 | 0.1498 |
| Ex. 20 | Phosphoric acid group | 1.29 | 4-20 | Antiseptic 1 | 100 | 0 | 0 | 0 | 0.0024 | 100 | 0 | 0.0024 |
| Ex.21 | Phosphoric acid group | 1.29 | 4-20 | Antiseptic 2 | 100 | 0 | 0 | 0 | 0.0024 | 100 | 0 | 0.0024 |
| Ex. 22 | Phosphoric acid group | 1.29 | 4-20 | Antiseptic 3 | 100 | 0 | 0 | 0 | 0.0024 | 100 | 0 | 0.0024 |
| Ex. 23 | Phosphoric acid group | 1.29 | 4-20 | Antiseptic 4 | 100 | 0 | 0 | 0 | 0.18 | 100 | 0 | 0.18 |
| Ex.24 | Phosphoric acid group | 1.29 | 4-20 | Antiseptic 5 | 100 | 0 | 0 | 0 | 0.18 | 100 | 0 | 0.18 |
| Comp. Ex. 1 | Phosphoric acid group | 1.29 | 4-20 | None | 100 | 20 | 0 | 0 | 0 | 83.3 | 16.7 | 0 |
| Comp. Ex. 2 | Phosphoric acid group | 1.29 | 4-20 | None | 100 | 20 | 0.5 | 10 | 0 | 76.6 | 15.3 | 0 |
| Comp. Ex. 3 | Phosphoric acid group | 1.29 | 4-20 | Antiseptic 4 | 100 | 20 | 0 | 0 | 50 | 58.8 | 11.8 | 29.4 |
| Comp. Ex. 4 | Phosphoric acid group | 1.29 | 4-20 | Antiseptic 4 | 100 | 20 | 0.5 | 10 | 50 | 55.4 | 11.1 | 27.7 |

(continued)

| | Functional group | Amount of functional group introduced [mmol/g] | Fiber diameter [nm] | Antiseptic | Mixing ratio (part by mass) | | | | | Content [mass % to sheet] | | |
|---|---|---|---|---|---|---|---|---|---|---|---|---|
| | | | | | CNF | PEO | PAE | PP | Antiseptic | CNF | PEO | Antiseptic |
| Comp. Ex. 5 | Carboxyl group | 1.01 | 4-20 | None | 100 | 20 | 0 | 0 | 0 | 83.3 | 16.7 | 0 |

[Table 3]

| | Slurry | | | | | | | | | | | | | | | | | | | | | | | |
|---|---|---|---|---|---|---|---|---|---|---|---|---|---|---|---|---|---|---|---|---|---|---|---|---|
| | Total light transmittance [%] | | | | | | | Total light transmittance retention percentage (%) | Haze [%] | | | | | | | Haze increasing percentage (%) | Viscosity [mPa·s] | | | | | | | Viscosity retention percentage (%) |
| | Initiation of measurement | 1 day | 2 days | 4 days | 8 days | 16 days | 20 days | After 480 hours | Initiation of measurement | 1 day | 2 days | 4 days | 8 days | 16 days | 20 days | After 480 hours | Initiation of measurement | 1 day | 2 days | 4 days | 8 days | 16 days | 20 days | After 480 hours |
| Ex. 1 | 99.8 | 99.8 | 99.7 | 99.7 | 99.7 | 99.6 | 99.7 | 99.9 | 0.8 | 0.4 | 0.2 | 0.2 | 0.3 | 0.4 | 0.4 | -50.0 | 82000 | 84000 | 88000 | 86000 | 88000 | 83000 | 82000 | 100.0 |
| Ex. 2 | 99.8 | 99.8 | 99.8 | 99.8 | 99.7 | 99.6 | 99.6 | 99.8 | 0.8 | 0.4 | 0.2 | 0.2 | 0.3 | 0.5 | 0.5 | -37.5 | 82000 | 86000 | 85000 | 86000 | 84000 | 82000 | 82000 | 100.0 |
| Ex. 3 | 99.7 | 99.8 | 99.8 | 99.8 | 99.7 | 99.5 | 99.5 | 99.8 | 0.8 | 0.4 | 0.2 | 0.2 | 0.5 | 0.5 | 0.5 | -37.5 | 82000 | 86000 | 85000 | 85000 | 86000 | 86000 | 86000 | 104.9 |
| Ex. 4 | 99.7 | 99.6 | 99.7 | 99.7 | 99.5 | 99.6 | 99.6 | 99.9 | 0.8 | 0.5 | 0.7 | 0.7 | 1 | 1 | 1 | 25.0 | 84000 | 87000 | 85000 | 86000 | 88000 | 84000 | 83000 | 98.8 |
| Ex. 5 | 99.8 | 99.8 | 99.8 | 99.8 | 99.7 | 99.6 | 99.7 | 99.9 | 0.8 | 0.4 | 0.2 | 0.2 | 0.4 | 0.4 | 0.4 | -50.0 | 83000 | 84000 | 88000 | 85000 | 86000 | 85000 | 84000 | 101.2 |
| Ex. 6 | 99.9 | 99.8 | 99.8 | 99.7 | 99.6 | 99.5 | 99.5 | 99.6 | 0.8 | 0.4 | 0.3 | 0.3 | 0.4 | 0.4 | 0.4 | -50.0 | 84000 | 88000 | 86000 | 86000 | 86000 | 87000 | 86000 | 102.4 |
| Ex. 7 | 99.8 | 99.8 | 99.8 | 99.8 | 99.7 | 99.6 | 99.7 | 99.9 | 0.9 | 0.5 | 0.6 | 0.6 | 0.9 | 1 | 0.9 | 0.0 | 85000 | 85000 | 79000 | 84000 | 82000 | 80000 | 80000 | 94.1 |
| Ex. 8 | 99.8 | 99.9 | 99.9 | 99.8 | 99.9 | 99.7 | 99.6 | 99.8 | 0.6 | 0.3 | 0.2 | 0.2 | 0.2 | 0.3 | 0.4 | -33.3 | 82000 | 86000 | 86000 | 85000 | 86000 | 82000 | 80000 | 97.6 |
| Ex. 9 | 99.8 | 99.8 | 99.9 | 99.7 | 99.8 | 99.6 | 99.6 | 99.8 | 0.6 | 0.2 | 0.2 | 0.2 | 0.2 | 0.4 | 0.5 | -16.7 | 83000 | 86000 | 80000 | 80000 | 82000 | 82000 | 82000 | 98.8 |
| Ex. 10 | 99.7 | 99.7 | 99.8 | 99.8 | 99.6 | 99.6 | 99.6 | 99.9 | 0.5 | 0.5 | 0.4 | 0.4 | 0.3 | 0.5 | 0.5 | 0.0 | 76000 | 68000 | 69000 | 68000 | 72000 | 72000 | 70000 | 92.1 |
| Ex. 11 | 99.7 | 99.7 | 99.7 | 99.7 | 99.6 | 99.5 | 99.5 | 99.8 | 0.5 | 0.3 | 0.4 | 0.5 | 0.3 | 0.4 | 0.5 | 0.0 | 75000 | 69000 | 67000 | 70000 | 72000 | 73000 | 72000 | 96.0 |
| Ex. 12 | 99.6 | 99.7 | 99.8 | 99.7 | 99.6 | 99.5 | 99.5 | 99.9 | 0.6 | 0.5 | 0.5 | 0.6 | 0.5 | 0.6 | 0.6 | 0.0 | 76000 | 71000 | 74000 | 72000 | 74000 | 73000 | 73000 | 96.1 |
| Ex. 13 | 99.6 | 99.2 | 99.3 | 99.2 | 99.1 | 99.1 | 99.2 | 99.6 | 0.8 | 0.5 | 0.6 | 0.7 | 0.7 | 0.7 | 0.7 | -12.5 | 76000 | 74000 | 74000 | 80000 | 77000 | 76000 | 75000 | 98.7 |
| Ex. 14 | 99.6 | 99.6 | 99.7 | 99.6 | 99.6 | 99.5 | 99.6 | 100.0 | 0.7 | 0.5 | 0.5 | 0.5 | 0.4 | 0.6 | 0.6 | -14.3 | 74000 | 68000 | 75000 | 72000 | 74000 | 74000 | 74000 | 100.0 |
| Ex. 15 | 99.7 | 99.7 | 99.8 | 99.7 | 99.6 | 99.5 | 99.6 | 99.9 | 0.6 | 0.3 | 0.4 | 0.5 | 0.4 | 0.5 | 0.5 | -16.7 | 74000 | 67000 | 73000 | 74000 | 74000 | 72000 | 72000 | 97.3 |
| Ex. 16 | 99.7 | 99.7 | 99.7 | 99.7 | 99.6 | 99.4 | 99.5 | 99.8 | 0.8 | 0.5 | 0.5 | 0.7 | 0.8 | 0.9 | 0.8 | 0.0 | 74000 | 68000 | 70000 | 71000 | 79000 | 76000 | 74000 | 100.0 |
| Ex. 17 | 99.8 | 99.8 | 99.8 | 99.8 | 99.8 | 99.6 | 99.7 | 99.9 | 0.5 | 0.2 | 0.3 | 0.5 | 0.3 | 0.5 | 0.5 | 0.0 | 76000 | 70000 | 76000 | 70000 | 72000 | 72000 | 72000 | 94.7 |
| Ex. 18 | 99.7 | 99.7 | 99.7 | 99.7 | 99.7 | 99.7 | 99.8 | 100.1 | 0.6 | 0.4 | 0.8 | 0.6 | 0.8 | 0.9 | 0.9 | 50.0 | 77000 | 67000 | 70000 | 70000 | 70000 | 70000 | 69000 | 89.6 |
| Ex. 19 | - | - | - | - | - | - | - | | - | - | - | - | - | - | - | | 82000 | 83000 | 82000 | 83000 | 82000 | 83000 | 83000 | 101.2 |
| Ex. 20 | 99.8 | 99.8 | 99.8 | 99.7 | 99.7 | 99.8 | 99.8 | 100.0 | 0.6 | 0.4 | 0.5 | 0.5 | 0.4 | 0.5 | 0.5 | -17 | 97000 | 96000 | 98000 | 97000 | 96000 | 96000 | 96000 | 99.0 |
| Ex. 21 | 99.8 | 99.7 | 99.7 | 99.8 | 99.7 | 99.8 | 99.7 | 99.9 | 0.5 | 0.5 | 0.5 | 0.4 | 0.6 | 0.5 | 0.5 | 0 | 97000 | 98000 | 97000 | 98000 | 98000 | 96000 | 97000 | 100.0 |
| Ex. 22 | 99.7 | 99.6 | 99.7 | 99.7 | 99.8 | 99.7 | 99.6 | 99.9 | 0.5 | 0.5 | 0.4 | 0.5 | 0.5 | 0.6 | 0.5 | 0 | 96000 | 96000 | 95000 | 96000 | 97000 | 97000 | 96000 | 100.0 |
| Ex. 23 | 99.7 | 99.7 | 99.6 | 99.7 | 99.8 | 99.8 | 99.8 | 100.1 | 0.5 | 0.5 | 0.6 | 0.4 | 0.5 | 0.5 | 0.4 | -20 | 98000 | 98000 | 97000 | 97000 | 98000 | 97000 | 97000 | 99.0 |
| Ex. 24 | 99.8 | 99.8 | 99.8 | 99.7 | 99.8 | 99.7 | 99.7 | 99.9 | 0.5 | 0.5 | 0.5 | 0.6 | 0.5 | 0.6 | 0.5 | 0 | 97000 | 96000 | 97000 | 96000 | 96000 | 97000 | 97000 | 100.0 |
| Comp. Ex. 1 | 99.7 | 99.8 | 99.9 | 99.8 | 99.7 | 99.7 | 99.6 | 99.9 | 0.9 | 1.6 | 1.2 | 1.3 | 1.2 | 1.3 | 1.2 | 33.3 | 85000 | 58000 | 60000 | 64000 | 58000 | 58000 | 58000 | 68.2 |
| Comp. Ex. 2 | 99.7 | 99.7 | 99.8 | 99.8 | 99.7 | 99.7 | 99.7 | 100.0 | 0.7 | 1.4 | 1.4 | 1.4 | 1.6 | 1.5 | 1.6 | 128.6 | 76000 | 64000 | 67000 | 65000 | 67000 | 52000 | 53000 | 69.7 |
| Comp. Ex. 3 | - | - | - | - | - | - | - | - | - | - | - | - | - | - | - | - | 63000 | - | - | - | - | - | - | - |
| Comp. Ex. 4 | - | - | - | - | - | - | - | - | - | - | - | - | - | - | - | - | 53000 | - | - | - | - | - | - | - |
| Comp. Ex. 5 | - | - | - | - | - | - | - | - | - | - | - | - | - | - | - | - | 81000 | 62000 | 61000 | 63000 | 62000 | 62000 | 63000 | 77.8 |

[Table 4]

| | Sheet | | | | | | | | |
|---|---|---|---|---|---|---|---|---|---|
| | Tensile elastic modulus [GPa] | | | Total light transmittance [%] | | | Haze [%] | | |
| | Initiation of measurement | 4 days | 8 days | Initiation of measurement | 4 days | 8 days | Initiation of measurement | 4 days | 8 days |
| Example 1 | 4.69 | 4.17 | 3.99 | 91.8 | 91.6 | 91.7 | 0.4 | 0.3 | 0.3 |
| Example 6 | 4.17 | 4.12 | 4.5 | 91.1 | 91.7 | 91.7 | 0.5 | 0.2 | 0.2 |
| Example 10 | 4.36 | 3.91 | 4.32 | 91.8 | 91.6 | 91.6 | 0.6 | 0.2 | 0.2 |
| Example 11 | 3.99 | 4.57 | 3.86 | 91.7 | 91.7 | 91.7 | 0.4 | 0.3 | 0.3 |
| Example 15 | 3.95 | 3.93 | 3.71 | 91.8 | 91.6 | 91.7 | 0.5 | 0.3 | 0.4 |
| Example 18 | 3.74 | 4.02 | 3.57 | 91.3 | 91.7 | 91.8 | 0.5 | 0.3 | 0.3 |

Regarding the slurries obtained in Examples, the viscosity of the slurry was maintained even after long-term storage. In addition, the slurries obtained in Examples tended to maintain high total light transmittance and low haze.

On the other hand, regarding the slurries obtained in Comparative Examples 1 and 2, the viscosity was decreased after long-term storage, and further, an increase in the haze was observed. Regarding the slurries obtained in Comparative Examples 3 and 4, the initial viscosity became low, and thickening properties were not sufficiently exhibited.

Moreover, the sheets obtained in Examples had high tensile elastic modulus, high total light transmittance, and low haze, regardless of the time of storing the slurries. On the other hand, the sheets obtained in Comparative Examples tended to deteriorate in terms of transparency, as the time of storing the slurry was prolonged.

## Claims

**1.** A cellulose fiber-containing composition comprising cellulose fibers having a fiber width of 1000 nm or less, and an antiseptic containing at least one type selected from a nitrogen atom, a sulfur atom and a halogen atom, wherein the content of the antiseptic is 10 parts by mass or less with respect to 100 parts by mass of the cellulose fibers.

**2.** The cellulose fiber-containing composition according to claim 1, wherein the cellulose fibers have a phosphoric acid group or a phosphoric acid group-derived substituent.

**3.** The cellulose fiber-containing composition according to claim 1 or 2, wherein the antiseptic is at least one type selected from an organic nitrogen sulfur compound, an organic nitrogen halogen compound, an organic nitrogen compound, and an organic sulfur compound.

**4.** The cellulose fiber-containing composition according to any one of claims 1 to 3, which further comprises a hydrophilic polymer, wherein
the content of the hydrophilic polymer is 0.5 parts by mass or more and 50 parts by mass or less, with respect to 100 parts by mass of the cellulose fibers.

**5.** The cellulose fiber-containing composition according to any one of claims 1 to 4, wherein the cellulose fiber-containing composition is a slurry, and when the solid concentration of the slurry is set at 1.8% by mass, the viscosity measured under conditions of 25°C and a rotation number of 3 rpm is 70000 mPa·s or more.

**6.** The cellulose fiber-containing composition according to any one of claims 1 to 5, wherein the cellulose fiber-containing composition is a slurry having a viscosity retention percentage of 80% or more, wherein the viscosity retention

percentage is defined according to the following equation:

Viscosity retention percentage (%) = slurry viscosity left at rest at 50°C for 480 hours / initial slurry viscosity x 100,

provided that the slurry viscosity after being left at rest at 50°C for 480 hours is a viscosity obtained by setting the solid concentration of the slurry at 1.8% by mass and measuring under conditions of 25°C and a rotation number of 3 rpm, after the slurry has been left at rest at 50°C for 480 hours, whereas the initial slurry viscosity is a viscosity obtained by setting the solid concentration of the slurry at 1.8% by mass and measuring under conditions of 25°C and a rotation number of 3 rpm.

**7.** The cellulose fiber-containing composition according to any one of claims 1 to 6, wherein the cellulose fiber-containing composition is a slurry, and the haze measured by setting the solid concentration of the slurry at 0.2% by mass and using a glass cell having an optical path length of 1 cm in accordance with JIS K 7136 is 2.0% or less.

**8.** The cellulose fiber-containing composition according to any one of claims 1 to 7, wherein the cellulose fiber-containing composition is a slurry having a haze increasing percentage of 50% or less, wherein the haze increasing percentage is defined according to the following equation:

Haze increasing percentage (%) = (haze of slurry after being left at rest at 50°C for 480 hours - initial haze of slurry) / initial haze of slurry x 100,

provided that the haze of a slurry after being left at rest at 50°C for 480 hours is a haze measured by setting the solid concentration of the slurry at 0.2% by mass and using a glass cell having an optical path length of 1 cm in accordance with JIS K 7136, after the slurry has been left at rest at 50°C for 480 hours, whereas the initial haze of a slurry is a haze measured by setting the solid concentration of the slurry at 0.2% by mass and using a glass cell having an optical path length of 1 cm in accordance with JIS K 7136.

**9.** The cellulose fiber-containing composition according to any one of claims 1 to 8, wherein the cellulose fiber-containing composition is a slurry for use in the formation of a sheet.

**10.** The cellulose fiber-containing composition according to any one of claims 1 to 9, wherein the cellulose fiber-containing composition is a slurry for use in the formation of a sheet, wherein the sheet, that formed after the slurry has been left at rest at 50°C for 192 hours, has a haze measured in accordance with JIS K 7136 of 1% or less.

**11.** A sheet comprising cellulose fibers having a fiber width of 1000 nm or less and an antiseptic containing at least one type selected from a nitrogen atom, a sulfur atom and a halogen atom, wherein
the content of the antiseptic is 10% by mass or less with respect to the total mass of the sheet.

**12.** The sheet according to claim 11, wherein the tensile elastic modulus measured under conditions of 23 °C and a relative humidity of 50% in accordance with JIS P 8113 is 3 GPa or more.

[Figure 1]

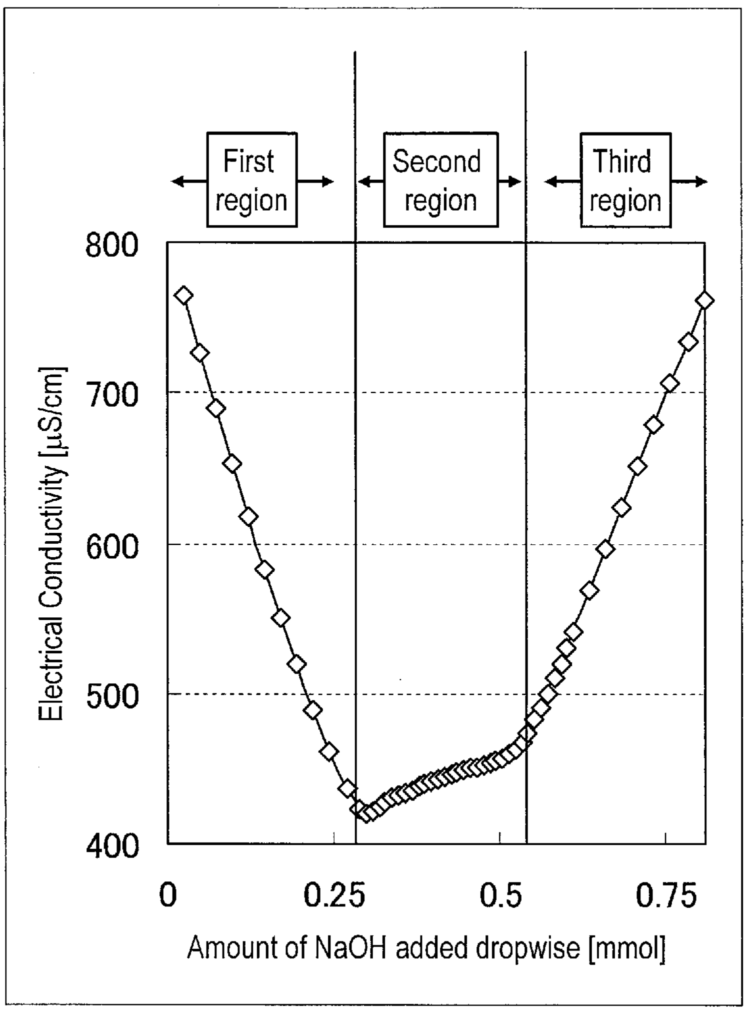
First region
Second region
Third region
800
700
600
500
400
Electrical Conductivity [µS/cm]
0
0.25
0.5
0.75
Amount of NaOH added dropwise [mmol]

[Figure 2]

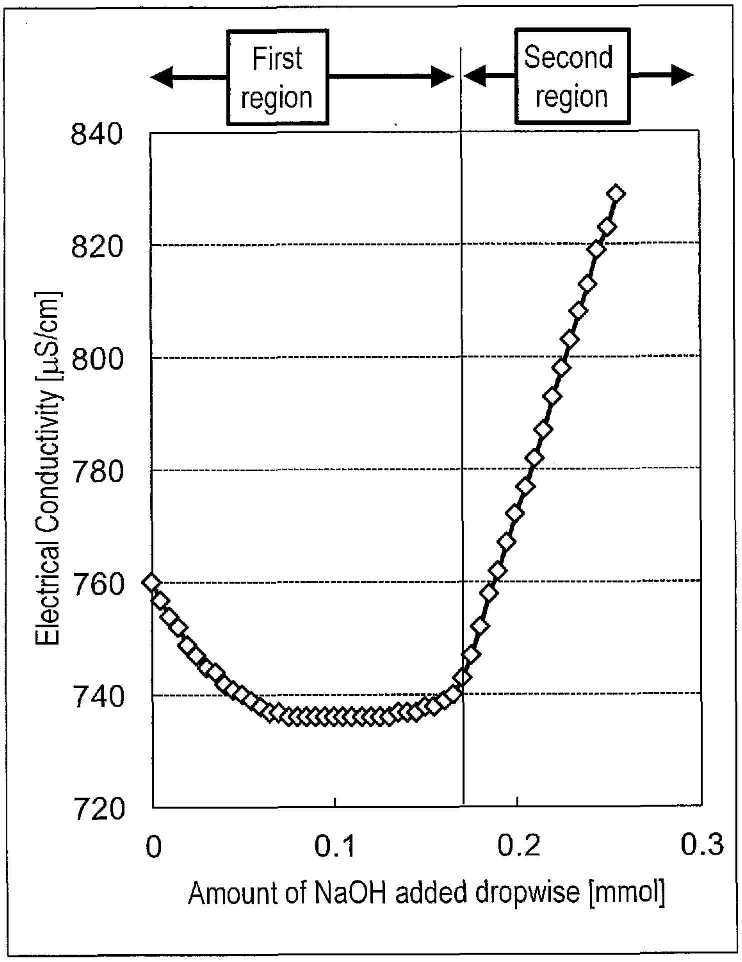
First region
Second region
840
820
800
780
760
740
720
Electrical Conductivity [μS/cm]
0
0.1
0.2
0.3
Amount of NaOH added dropwise [mmol]

**INTERNATIONAL SEARCH REPORT**

International application No.
PCT/JP2017/028525

A. CLASSIFICATION OF SUBJECT MATTER
*C08L1/02*(2006.01)i, *C08K5/16*(2006.01)i, *C08K5/36*(2006.01)i, *D21H11/20*(2006.01)i, *D21H15/02*(2006.01)i, *C08B5/00*(2006.01)n

According to International Patent Classification (IPC) or to both national classification and IPC

B. FIELDS SEARCHED

Minimum documentation searched (classification system followed by classification symbols)
C08L1/00-1/32, C08K3/00-13/08, C08L101/00-101/16, D21H11/20, D21H15/02, C08B5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2014-530942 A (Jenacell GmbH), 20 November 2014 (20.11.2014), claims; paragraphs [0001], [0002], [0030] to [0032]; example 2<br>& US 2014/0284522 A1<br>claims; paragraphs [0001], [0002], [0030] to [0032]; example 2<br>& WO 2013/060321 A2 & CN 104053674 A | 1,3,4,11,12<br>2,5-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 September 2017 (27.09.17) | 10 October 2017 (10.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/028525

C (Continuation). DOCUMENTS CONSIDERED TO BE RELEVANT

| Category* | Citation of document, with indication, where appropriate, of the relevant passages | Relevant to claim No. |
|---|---|---|
| X | JP 7-331203 A (Borden, Inc.), 19 December 1995 (19.12.1995), claims; paragraphs [0018] to [0021], [0028], [0029], [0032] to [0035]; examples & US 5416140 A claims; column 3, lines 24 to 54; column 4, lines 53 to 66; column 5, lines 19 to 36; examples & CN 1114338 A | 1-12 |
| A | JP 2010-37348 A (Dai-Ichi Kogyo Seiyaku Co., Ltd.), 18 February 2010 (18.02.2010), claims; examples (Family: none) | 1-12 |
| A | JP 2016-65116 A (Dai-Ichi Kogyo Seiyaku Co., Ltd.), 28 April 2016 (28.04.2016), claims; paragraph [0024] (Family: none) | 1-12 |
| A | JP 2011-30569 A (Kabushiki Kaisha Eiwa Planning), 17 February 2011 (17.02.2011), claims (Family: none) | 1-12 |
| A | JP 63-130390 A (Mitsubishi Heavy Industries, Ltd.), 02 June 1988 (02.06.1988), claims; page 3, upper right column, lines 11 to 17; examples (Family: none) | 1-12 |
| A | JP 5-255538 A (Asahi Chemical Industry Co., Ltd.), 05 October 1993 (05.10.1993), claims (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015189698 A
- JP 2013181167 A
- JP 2011057571 A
- WO 2014024876 A
- WO 2012107642 A
- WO 2013121086 A
- WO 2011013567 A
- JP 2010023275 A


### Non-patent literature cited in the description


- **SEAGAL et al.** *Textile Research Journal,* 1959, vol. 29, 786